# EUROPÄISCHE PATENTSCHRIFT

(11) **EP 3 695 054 B1**
(45) Veröffentlichungstag und Bekanntmachung des Hinweises auf die Patenterteilung: **06.08.2025**
(21) Anmeldenummer: 18783392.6
(22) Anmeldetag: 28.09.2018
(51) Int. Cl.: E01F 7/04

(54) **NETZ- UND SEILKONSTRUKTION MIT SICHERHEITSNETZ**
NET AND CABLE ASSEMBLY WITH SAFETY NET
AGENCEMENT DE FILET ET DE CÂBLE AVEC UN FILET DE SÉCURITÉ

(30) Priorität: 12.10.2017 DE 102017123816
(43) Veröffentlichungstag der Anmeldung: 19.08.2020
(73) Patentinhaber: Geobrugg AG, 8590 Romanshorn (CH)
(72) Erfinder: SENNHAUSER, Marcel, 9300 Wittenbach (CH)
(74) Vertreter: Daub, Thomas
(86) Internationale Anmeldenummer: PCT/EP2018/076388
(87) Internationale Veröffentlichungsnummer: WO 2019/072586

(56) Entgegenhaltungen:
- EP-A1- 0 370 945
- EP-A2- 2 017 389
- WO-A1-99/43894
- DE-U1- 20 300 821
- JP-A- H10 280 332

## Beschreibung

### Stand der Technik

Die Erfindung betrifft eine Netz- und Seilkonstruktion mit einem Sicherheitsnetz nach dem Oberbegriff des Anspruchs 1.

In den Dokumenten JP H10-280332 A, EP 2 017 389 A2 und DE 203 00 821 U1 sind bereits Sicherheitsnetze zu einem Auffangen von Gestein, wobei das Sicherheitsnetz zumindest zu einem Großteil aus ineinandergreifenden Netzelementen gebildet ist, vorgeschlagen worden.

Die Aufgabe der Erfindung besteht insbesondere darin, ein gattungsgemäßes Sicherheitsnetz mit erhöhter Sicherheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Sicherheitsnetz, insbesondere zu einem Auffangen schwerer Lasten, vorzugsweise dynamischer Einschlagskörper, insbesondere Gestein, wobei das Sicherheitsnetz zumindest zu einem Großteil aus ineinandergreifenden Netzelementen gebildet ist.

Es wird vorgeschlagen, dass eine maximale Gesamterstreckung des Sicherheitsnetzes parallel zu der Haupterstreckungsrichtung des Sicherheitsnetzes in einem zumindest eine äußerste Reihe von Netzelementen umfassenden Außenbereich des Sicherheitsnetzes, wesentlich größer ist als eine minimale Gesamterstreckung des Sicherheitsnetzes parallel zu der Haupterstreckungsrichtung in einem von dem Außenbereich verschiedenen Innenbereich des Sicherheitsnetzes. Dadurch kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Vorteilhaft kann eine Bildung von offenen Stellen und/oder Löchern infolge eines Einschlags eines dynamischen Einschlagskörpers, insbesondere in einem Bereich, der von der Abfangfläche vor dem Einschlag überdeckt wurde, vermieden werden, wodurch vorteilhaft ein Durchfallen eines weiteren dynamischen Einschlagkörpers durch das Sicherheitsnetz bei einem auf den Einschlag folgenden weiteren Einschlag unterbunden werden kann. Erfindungsgemäß kann mittels zusätzlicher, in einem Belastungsfall Weg gebender Netzelemente an zumindest einer Außenkante, an welcher das Sicherheitsnetz aufgehängt ist, ein zusätzlicher Pufferweg geschaffen werden, wodurch vorteilhaft ein Einschlag besser abgedämpft werden kann. Zudem kann, insbesondere durch einen zusätzlichen Pufferweg, vorteilhaft ein Einschlag eines dynamischen Einschlagskörpers in Nähe eines Randes des Sicherheitsnetzes besser absorbiert werden, insbesondere unter einer Verringerung von möglichen Schäden an einer Aufhängung des Sicherheitsnetzes. Des Weiteren kann mittels der erfindungsgemäßen Netz- und Seilkonstruktion mit einem Sicherheitsnetz im montierten Zustand vorteilhaft eine einfache Führung der Netzelemente um ein das Sicherheitsnetz tragendes Stützelement herum ermöglicht werden. Außerdem kann vorteilhaft eine Stabilität verbessert werden, insbesondere indem eine an das Sicherheitsnetz angreifende Kraft vorteilhaft auf eine große Anzahl an Netzelementen verteilt werden kann, wobei zudem insbesondere eine vorteilhafte, insbesondere gleichmäßige, Kraftverteilung erreicht werden kann, wodurch insbesondere zumindest eine Fangeigenschaft, wie beispielsweise eine Verformbarkeit, eine Dehnbarkeit, eine Rückfedereigenschaft, eine Durchbruchfestigkeit usw., des Sicherheitsnetzes zum Auffangen zumindest eines dynamischen Einschlagskörpers optimiert werden kann. Des Weiteren ermöglicht die erfindungsgemäße Netz- uns Seilkonstruktion insbesondere eine vereinfachte Montage, wodurch vorteilhaft Kosten, Material- und/oder Montageaufwand reduziert werden kann.

Ein "dynamischer Einschlagskörper" soll insbesondere als eine unter Einfluss eines Gravitationspotentials bewegte Masse verstanden werden. Insbesondere umfasst der dynamische Einschlagskörper zumindest ein Gestein, vorzugsweise Schutt, und/oder gefrorenes Wasser. Alternativ oder zusätzlich kann der dynamische Einschlagskörper auch Maschinen oder Maschinenteile, beispielsweise von Fortbewegungsmitteln und/oder Baumaschinen, und/oder Lebewesen oder Teile von Lebewesen, beispielsweise Baumstämme und/oder Äste, umfassen. Insbesondere ist eine "schwere Last" schwerer als 1 kg, vorzugsweise schwerere als 10 kg, bevorzugt schwerer als 100 kg und besonders bevorzugt schwerer als 1000 kg. Unter einem "Netzelement" soll insbesondere ein, insbesondere vereinzelbares, Grundelement des Sicherheitsnetzes verstanden werden, welches mittels eines Ineinandergreifens mit benachbarten Grundelementen das Sicherheitsnetz ausbildet. Das Netzelement ist erfindungsgemäß als in sich geschlossenes, filamentartiges Gebilde, insbesondere Drahtgebilde, ausgebildet. Vorzugsweise liegt das Gebilde, insbesondere Drahtgebilde, in einem unbelasteten Zustand im Wesentlichen in einer Ebene. Vorzugsweise ist das filamentartige Gebilde, insbesondere das Drahtgebilde, vorzugsweise der Draht des Drahtgebildes, ein hochfester Stahldraht. Beispielsweise kann es sich bei dem hochfesten Stahl um Federstahl und/oder Drahtstahl und/oder einen für Drahtseile geeigneten Stahl handeln. Insbesondere weist der Draht eine Zugfestigkeit von wenigstens 800 N mm⁻², vorteilhaft von wenigstens 1000 N mm⁻², besonders vorteilhaft von wenigstens 1200 N mm⁻², vorzugsweise von wenigstens 1400 N mm⁻² und besonders bevorzugt von wenigstens 1600 N mm⁻², insbesondere eine Zugfestigkeit von etwa 1770 N mm⁻² oder eine Zugfestigkeit von etwa 1960 N mm⁻² auf. Es ist auch denkbar, dass der Draht eine noch höhere Zugfestigkeit aufweist, beispielsweise eine Zugfestigkeit von wenigstens 2000 N mm⁻² oder von wenigstens 2200 N mm⁻² oder auch von
wenigstens 2400 N mm⁻². Hierdurch kann eine hohe Belastbarkeit, insbesondere eine hohe Zugfestigkeit und/oder eine hohe Steifigkeit quer zum Geflecht erzielt werden. Außerdem können vorteilhafte Biegeeigenschaften erzielt werden. Das Netzelement kann insbesondere eine unregelmäßige Form oder vorzugsweise eine regelmäßige Form aufweisen, welche zumindest teilweise eine Form eines Kreises, einer Raute und/oder eines gleichmäßigen und/oder unregelmäßigen Polygons darstellt. Insbesondere können verschiedene Netzelemente des Sicherheitsnetzes verschiedene Formen aufweisen, bevorzugt weisen die Netzelemente jedoch eine im Wesentlichen identische Form auf. Bevorzugt ist das Netzelement als ein Ring, insbesondere ein Drahtring, ausgebildet. Insbesondere bildet das Netzelement ein Netzglied eines Ringnetzes zumindest teilweise aus. Ein Netzglied umfasst insbesondere zumindest ein Bündel von Netzelementen oder vorzugsweise genau ein einzelnes Netzelement. Unter einem Bündel von Netzelementen soll insbesondere eine Mehrzahl an Netzelementen verstanden werden, welche dazu vorgesehen sind, in einem Sicherheitsnetz im Wesentlichen konzentrisch übereinander zu liegen. Vorzugsweise weisen die Netzelemente zumindest einen Durchmesser von 3 cm, bevorzugt zumindest von 5 cm und besonders bevorzugt von weniger als 40 cm auf. Unter "zu einem Großteil" soll, insbesondere in diesem Zusammenhang, insbesondere zumindest zu 80 %, vorzugsweise zumindest zu 90 %, bevorzugt zumindest zu 95 % und besonders bevorzugt vollständig verstanden werden. Unter einer "Gesamterstreckung" soll insbesondere eine Erstreckung zwischen zwei gegenüberliegenden äußersten Kanten des Sicherheitsnetzes verstanden werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Erfindungsgemäß soll jegliche Art von Erstreckung so verstanden werden, dass sie bei einem vollständig flach ausgebreiteten Sicherheitsnetz, frei von inneren Spannungen, gemessen ist. Unter einer "äußersten Reihe von Netzelementen" soll insbesondere eine entlang einer geraden Linie verlaufende Reihe von Netzelementen verstanden werden, welche auf zumindest einer gemeinsamen Seite frei sind von benachbarten Netzelementen. Der Außenbereich erstreckt sich insbesondere in einer Haupterstreckungsrichtung des Sicherheitsnetzes zumindest über eine gesamte Ausdehnung, insbesondere über eine insbesondere maximale Gesamterstreckung, des Sicherheitsnetzes. Vorzugsweise enthält der Außenbereich zumindest eine Mehrzahl, insbesondere vollständiger, entlang einer, vorzugsweise zu der Haupterstreckungsrichtung parallelen, geraden Linie verlaufender Reihen von Netzelementen, bevorzugt zumindest zwei, insbesondere vollständige, entlang einer, vorzugsweise zu der Haupterstreckungsrichtung parallelen, geraden Linie verlaufende Reihen von Netzelementen und besonders bevorzugt zumindest eine, insbesondere vollständige, entlang einer, vorzugsweise zu der Haupterstreckungsrichtung parallelen, geraden Linie verlaufende Reihe von Netzelementen. Vorzugsweise umfasst der Außenbereich zumindest eine äußerste Reihe von Netzelementen. Der Innenbereich erstreckt sich insbesondere in einer Haupterstreckungsrichtung des Sicherheitsnetzes zumindest über eine gesamte Ausdehnung, insbesondere über eine, insbesondere minimale Gesamterstreckung, des Sicherheitsnetzes. Vorzugsweise enthält der Innenbereich zumindest eine Mehrzahl, insbesondere vollständiger, entlang einer, vorzugsweise zu der Haupterstreckungsrichtung parallelen, geraden Linie verlaufender Reihen von Netzelementen, bevorzugt zumindest zwei, insbesondere vollständige, entlang einer, vorzugsweise zu der Haupterstreckungsrichtung parallelen, geraden Linie verlaufende Reihen von Netzelementen und besonders bevorzugt zumindest eine, insbesondere vollständige, entlang einer, vorzugsweise zu der Haupterstreckungsrichtung parallelen, geraden Linie verlaufende Reihe von Netzelementen. Insbesondere sind der Außenbereich und der Innenbereich zueinander überlappungsfrei.

Ferner wird vorgeschlagen, dass die maximale Gesamterstreckung des Sicherheitsnetzes parallel zu einer Haupterstreckungsrichtung des Sicherheitsnetzes in dem Außenbereich zumindest um einen, vorzugsweise zumindest um zwei, bevorzugt zumindest um drei mittlere/n Durchmesser der Netzelemente und/oder um zumindest 5 %, vorzugsweise um zumindest 10 %, bevorzugt um zumindest 15 % und besonders bevorzugt um zumindest 20 % größer ist als die minimale Gesamterstreckung des Sicherheitsnetzes parallel zu der Haupterstreckungsrichtung in dem von dem Außenbereich verschiedenen Innenbereich. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Erfindungsgemäß kann mittels zusätzlicher, in einem Belastungsfall Weg gebender Netzelemente an zumindest einer Außenkante, an welcher Netzelemente aufgehängt sind, ein zusätzlicher Pufferweg geschaffen werden, wodurch vorteilhaft ein Einschlag besser abgedämpft werden kann. Unter einem "mittleren Durchmesser" soll insbesondere ein in eine im Wesentlichen ebene Ausbreitungsrichtung des Sicherheitsnetzes gesehener, gemittelter Durchmesser von Netzelementen verstanden werden. Zu einer Berechnung des mittleren Durchmessers wird/werden insbesondere eine Mehrzahl zufällig bestimmter, bevorzugt alle, Netzelemente des Sicherheitsnetzes herangezogen. Ein Durchmesser eines einzelnen Netzelements berechnet sich vorzugsweise aus einem Mittelwert eines Durchmessers parallel zu der Haupterstreckungsrichtung des Sicherheitsnetzes und/oder eines Durchmessers senkrecht zu der Haupterstreckungsrichtung des Sicherheitsnetzes. Unter einem "Durchmesser" eines Netzelements soll vorzugsweise ein Durchmesser eines kleinsten Kreises verstanden werden, welcher, insbesondere in einer Haupterstreckungsebene des Sicherheitsnetzes, das Netzelement vollständig umfasst. Insbesondere weicht eine Form eines ausgebreiteten Sicherheitsnetzes an zumindest einer Ecke von einer Rechteckform ab.

Des Weiteren wird vorgeschlagen, dass eine maximale Gesamterstreckung des Sicherheitsnetzes parallel zu der Haupterstreckungsrichtung des Sicherheitsnetzes in einem von dem Außenbereich verschiedenen weiteren Außenbereich des Sicherheitsnetzes, welcher insbesondere zumindest eine weitere äußerste Reihe von Netzelementen umfasst, die insbesondere verschieden ist von der äußersten Reihe von Netzelementen, größer ist als eine minimale Gesamterstreckung des Sicherheitsnetzes parallel zu der Haupterstreckungsrichtung in einem von dem Außenbereich und dem weiteren Außenbereich verschiedenen Innenbereich des Sicherheitsnetzes. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden. Erfindungsgemäß kann mittels zusätzlicher, in dem Belastungsfall Weg gebender Netzelemente an zumindest einer Außenkante, an welcher Netzelemente aufgehängt sind, ein zusätzlicher Pufferweg geschaffen werden, wodurch vorteilhaft ein Einschlag besser abgedämpft werden kann, insbesondere indem die Abfangfläche nach einem Einschlag des dynamischen Einschlagskörpers vorteilhaft groß gehalten werden kann. Der weitere Außenbereich erstreckt sich insbesondere in einer Haupterstreckungsrichtung des Sicherheitsnetzes zumindest über eine gesamte Ausdehnung, insbesondere über eine insbesondere maximale Gesamterstreckung, des Sicherheitsnetzes. Vorzugsweise enthält der weitere Außenbereich zumindest eine Mehrzahl, insbesondere vollständiger, entlang einer, vorzugsweise zu der Haupterstreckungsrichtung parallelen, geraden Linie verlaufender Reihen von Netzelementen, bevorzugt zumindest zwei, insbesondere vollständige, entlang einer, vorzugsweise zu der Haupterstreckungsrichtung parallelen, geraden Linie verlaufende Reihen von Netzelementen und besonders bevorzugt zumindest eine, insbesondere vollständige, entlang einer, vorzugsweise zu der Haupterstreckungsrichtung parallelen, geraden Linie verlaufende Reihe von Netzelementen. Vorzugsweise umfasst der weitere Außenbereich zumindest eine äußerste Reihe von Netzelementen. Vorzugsweise sind der Außenbereich, der weitere Außenbereich und/oder der Innenbereich zueinander überlappungsfrei.

Vorzugsweise umfasst der weitere Außenbereich eine einer im Außenbereich umfassten Außenkante in eine Richtung senkrecht zu der Haupterstreckungsrichtung des Sicherheitsnetzes gegenüberliegende weitere Außenkante des Sicherheitsnetzes. Insbesondere weicht die Form des ausgebreiteten Sicherheitsnetzes an zumindest zwei Ecken von einer Rechteckform ab. Vorzugsweise erstreckt sich die Haupterstreckungsrichtung des Außenbereichs, des weiteren Außenbereichs und/oder des Innenbereichs in einer zu dem Sicherheitsnetz parallelen Ebene senkrecht und/oder bevorzugt parallel zu der Haupterstreckungsrichtung des Sicherheitsnetzes. Vorzugsweise umfasst der Außenbereich, der weitere Außenbereich und/oder der Innenbereich zumindest eine, bevorzugt zumindest zwei, insbesondere zumindest teilweise schräg und/oder zumindest teilweise senkrecht zu der Haupterstreckungsrichtung verlaufende, Seitenkante/Seitenkanten des Sicherheitsnetzes.

Außerdem wird vorgeschlagen, dass die Netzelemente spiegelsymmetrisch in Bezug auf eine zu einer Haupterstreckungsebene des Sicherheitsnetzes zumindest im Wesentlichen senkrechte Spiegelebene und/oder in Bezug auf eine zu einer Haupterstreckungsrichtung des Sicherheitsnetzes zumindest im Wesentlichen parallele Spiegelebene angeordnet sind. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Erfindungsgemäß kann mittels zusätzlicher, in dem Belastungsfall Weg gebender Netzelemente an zumindest einer Außenkante, an welcher Netzelemente aufgehängt sind, ein zusätzlicher Pufferweg geschaffen werden, wodurch vorteilhaft ein Einschlag besser abgedämpft werden kann. Insbesondere weicht die Form des ausgebreiteten Sicherheitsnetzes an zumindest vier Ecken von einer Rechteckform ab. Unter einer "Haupterstreckungsebene" einer Baueinheit soll insbesondere eine Ebene verstanden werden, welche parallel zu einer größten Seitenfläche eines kleinsten gedachten Quaders ist, welcher die Baueinheit gerade noch vollständig umschließt, und welche insbesondere durch den Mittelpunkt des Quaders verläuft.

Weiterhin wird vorgeschlagen, dass zumindest ein in eine Richtung parallel zu einer Haupterstreckungsrichtung des Sicherheitsnetzes über den Innenbereich, insbesondere über eine Gesamterstreckung des Innenbereichs, überstehender Teilbereich des Sicherheitsnetzes, insbesondere ein Außenbereich des Sicherheitsnetzes, zumindest vier, vorzugsweise zumindest sechs, bevorzugt zumindest neun und besonders bevorzugt zumindest zwölf Netzelemente aufweist. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Unter einem "zumindest ein in eine Richtung parallel zu einer Haupterstreckungsrichtung des Sicherheitsnetzes über den Innenbereich überstehenden Teilbereich des Sicherheitsnetzes" soll insbesondere ein Außenbereich verstanden werden. Unter einem "Außenbereich" des Sicherheitsnetzes soll insbesondere zumindest ein Teilbereich des Sicherheitsnetzes verstanden werden, welcher einen Überlapp über einen maximal großen, rechteckigen Bereich des Sicherheitsnetzes, welcher vollständig durch das Sicherheitsnetz bedeckt ist, bildet. Erfindungsgemäß umfasst der Außenbereich eine Mehrzahl an, in eine Haupterstreckungsrichtung über die minimale Gesamterstreckung des Sicherheitsnetzes hinaus stehenden Netzelementen.

Zudem wird vorgeschlagen, dass zumindest ein in eine Richtung parallel zu einer Haupterstreckungsrichtung des Sicherheitsnetzes über den Innenbereich, insbesondere über eine Gesamterstreckung des Innenbereichs, überstehender Teilbereich des Sicherheitsnetzes, insbesondere ein Außenbereich des Sicherheitsnetzes, eine Anzahl von in der Haupterstreckungsrichtung des Sicherheitsnetzes nebeneinander in einer Reihe angeordneten Netzelementen aufweist, welche zumindest einem Zwanzigstel, vorzugsweise zumindest einem Fünfzehntel, bevorzugt zumindest einem Zehntel und besonders bevorzugt zumindest einem Fünftel einer maximalen Anzahl aller nebeneinander senkrecht zur Haupterstreckungsrichtung des Sicherheitsnetzes angeordneten Reihen von Netzelementen entspricht. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann.

Zusätzlich wird vorgeschlagen, dass zumindest ein in eine Richtung parallel zu einer Haupterstreckungsrichtung des Sicherheitsnetzes über den Innenbereich, insbesondere über eine Gesamterstreckung des Innenbereichs, überstehender Teilbereich des Sicherheitsnetzes, insbesondere ein Außenbereich des Sicherheitsnetzes, eine Anzahl senkrecht zu der Haupterstreckungsrichtung des Sicherheitsnetzes nebeneinander in einer Reihe angeordneter Netzelemente aufweist, welche zumindest einem Zehntel, vorzugsweise zumindest einem Achtel, vorteilhaft zumindest einem Sechstel, bevorzugt zumindest einem Viertel und besonders bevorzugt zumindest einer Hälfte einer maximalen Anzahl aller nebeneinander senkrecht zur Haupterstreckungsrichtung des Sicherheitsnetzes angeordneten Reihen von Netzelementen entspricht. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Vorzugsweise entspricht die Anzahl senkrecht zu der Haupterstreckungsrichtung des Sicherheitsnetzes nebeneinander in einer Reihe angeordneter Netzelemente in dem in eine Richtung parallel zu einer Haupterstreckungsrichtung des Sicherheitsnetzes über den Innenbereich, insbesondere über eine Gesamterstreckung des Innenbereichs, überstehenden Teilbereich des Sicherheitsnetzes zumindest der halben Anzahl, vorzugsweise zumindest der genauen Anzahl und bevorzugt zumindest der doppelten Anzahl von parallel zu der Haupterstreckungsrichtung des Sicherheitsnetzes nebeneinander in einer Reihe angeordneten Netzelementen in dem Teilbereich.

Ferner wird vorgeschlagen, dass zumindest ein in eine Richtung parallel zu einer Haupterstreckungsrichtung des Sicherheitsnetzes über den Innenbereich, insbesondere über eine Gesamterstreckung des Innenbereichs, überstehender Teilbereich des Sicherheitsnetzes, insbesondere ein Außenbereich des Sicherheitsnetzes, eine zumindest im Wesentlichen dreiecksförmige Anordnung von Netzelementen aufweist. Insbesondere durch eine derartige Konstruktion des Sicherheitsnetzes kann vorteilhaft eine erhöhte Sicherheit ermöglicht werden, insbesondere hinsichtlich eines Auffangens von dynamischen Einschlagskörpern in dem Sicherheitsnetz. Vorteilhaft kann eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Vorzugsweise weist die dreiecksförmige Anordnung im Wesentlichen eine Form eines in Haupterstreckungsrichtung des Sicherheitsnetzes spitz mit einem Winkel unter 45° zulaufenden Dreiecks auf. Alternativ kann die Dreiecksform auch eine im Wesentlichen gleichschenklige Dreiecksform und/oder eine Dreiecksform, welche in Haupterstreckungsrichtung des Sicherheitsnetzes mit einem Winkel größer als 45° zusammenläuft, sein.

Des Weiteren wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, einen Umfang aufweist, welcher wesentlich von einem mittleren Umfang von Netzelementen außerhalb des Teilbereichs abweicht. Dadurch kann insbesondere eine im Belastungsfall vorteilhafte Kraftverteilung in dem Sicherheitsnetz ermöglicht werden, wodurch insbesondere zumindest eine Fangeigenschaft des Sicherheitsnetzes zum Auffangen zumindest eines dynamischen Einschlagskörpers optimiert werden kann. Zudem kann vorteilhaft eine Stabilität erhöht werden. Unter einem "Umfang" eines Netzelements soll insbesondere eine Gesamtlänge, insbesondere zumindest einer Windung, des in sich geschlossenen Filaments, aus dem das Netzelement besteht, verstanden werden. Im Falle eines Rings entspricht der Umfang einem Kreisumfang. Unter einem "mittleren Umfang" soll insbesondere ein Mittelwert der Umfänge, insbesondere der Gesamtlängen, insbesondere der Windungen, der in sich geschlossenen Filamente, aus denen die Netzelemente bestehen, einer zufälligen Auswahl einer Mehrzahl an, vorzugsweise aller, Netzelementen/e des Sicherheitsnetzes verstanden werden. Unter einem "wesentlichen Abweichen" soll in diesem Zusammenhang insbesondere verstanden werden, dass ein Umfang zumindest eines Netzelements in dem Teilbereich zumindest um 50 %, vorzugsweise zumindest um 30 %, bevorzugt zumindest um 20 % und besonders bevorzugt zumindest um 10 % von dem mittleren Umfang der Netzelemente außerhalb des Teilbereichs abweicht. Insbesondere können alle Netzelemente des Teilbereichs eine im Wesentlichen identische Abweichung aufweisen. Alternativ weisen die Netzelemente des Teilbereichs zumindest teilweise eine unterschiedliche Abweichung auf. Vorzugsweise sind die Netzelemente in dem Teilbereich zumindest teilweise zumindest um 10 % größer, vorzugsweise zumindest um 20 % größer, bevorzugt zumindest um 30 % größer oder besonders bevorzugt zumindest um 50 % größer als die Netzelemente außerhalb des Teilbereichs. Alternativ oder zusätzlich können die Netzelemente in dem Teilbereich zumindest teilweise zumindest 50 % kleiner, vorzugsweise zumindest um 30 % kleiner, bevorzugt zumindest um 20 % kleiner oder besonders bevorzugt zumindest um 10 % kleiner als die Netzelemente außerhalb des Teilbereichs sein.

Zudem wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, in einem Testversuch eine Reißfestigkeit aufweist, welche wesentlich von einer mittleren Reißfestigkeit von Netzelementen außerhalb des Teilbereichs abweicht. Dadurch kann, insbesondere im Belastungsfall, eine vorteilhafte Kraftverteilung in dem Sicherheitsnetz ermöglicht werden. Vorteilhaft kann eine Reaktion des Netzes auf einen, insbesondere zu erwartenden, Einschlag optimiert werden, wodurch eine Sicherheit verbessert werden kann. Unter einer "Reißfestigkeit" soll insbesondere eine maximal mögliche Belastung eines Netzelements vor einem Brechen des Netzelements verstanden werden. Vorzugsweise ist die maximale Belastung vor einem Brechen in einem Testversuch mittels einer geeigneten Testanordnung messbar. In dem Testversuch wird auf ein Testnetzelement eine künstliche Belastung mittels der Testanordnung ausgeübt. Das Testnetzelement stellt ein zu dem in dem Teilbereich angeordneten Netzelement identisches Netzelement dar. Insbesondere stammt das Testnetzelement aus einem gleichen Produktionsbatch wie das Netzelement, insbesondere zur Berücksichtigung von Materialqualitätsschwankungen. Ein inkrementelles Erhöhen einer auf das Testnetzelement wirkenden Belastung bewirkt bei einer bestimmten Kraft eine Verformung und/oder ein Brechen des Testnetzelements Der Wert der minimal erforderlichen Kraft bei dem Brechen bestimmt die Reißfestigkeit. Unter einer "mittleren Reißfestigkeit" soll insbesondere eine durchschnittliche Reißfestigkeit einer Mehrzahl von Testnetzelementen einer identischen Bauart und/oder eines identischen Produktionsbatchs verstanden werden. Unter einem "wesentlichen Abweichen" soll in diesem Zusammenhang insbesondere verstanden werden, dass eine Reißfestigkeit zumindest eines Netzelements in dem Teilbereich zumindest um 500 %, vorzugsweise zumindest um 300 %, vorteilhaft zumindest um 150 %, bevorzugt zumindest um 50 % und besonders bevorzugt zumindest um 10 % von der mittleren Reißfestigkeit der Netzelemente außerhalb des Teilbereichs abweicht. Insbesondere können alle Netzelemente des Teilbereichs eine im Wesentlichen identische Abweichung aufweisen. Alternativ weisen die Reißfestigkeiten der Netzelemente des Teilbereichs zumindest teilweise unterschiedliche Abweichungen auf. Vorzugsweise weisen die Netzelemente in dem Teilbereich zumindest teilweise eine Reißfestigkeit auf, die zumindest 10 % größer, vorzugsweise zumindest um 50 % größer, vorteilhaft zumindest um 150 % größer, bevorzugt zumindest um 300 % größer oder besonders bevorzugt zumindest um 500 % größer als eine mittlere Reißfestigkeit der Netzelemente außerhalb des Teilbereichs. Alternativ oder zusätzlich kann die Reißfestigkeit der Netzelemente in dem Teilbereich zumindest teilweise zumindest 500 % kleiner, vorzugsweise zumindest 300 % kleiner, vorteilhaft zumindest 150 % kleiner, bevorzugt zumindest 50 % kleiner oder besonders bevorzugt zumindest 10 % kleiner sein als eine mittlere Reißfestigkeit der Netzelemente außerhalb des Teilbereichs.

Zudem wird vorgeschlagen, dass zumindest ein Netzelement, insbesondere zumindest eines in eine Richtung parallel zu einer Haupterstreckungsrichtung des Sicherheitsnetzes über den Innenbereich überstehenden Teilbereichs des Sicherheitsnetzes, eine Sollbruchstelle aufweist, dadurch kann vorteilhaft eine gezielte Kraftlenkung bei einem Einschlag ermöglicht werden. Zudem kann vorteilhaft ein unkontrolliertes Zerreißen des Sicherheitsnetzes vermieden werden. Eine Sollbruchstelle kann insbesondere als eine Stelle mit im Vergleich zu dem Rest des Netzelements dünnerer Materialstärke, als vorbelastete Stelle, beispielsweise durch manuelles hin und her Biegen und/oder als eine Stelle mit einer von dem Rest des Netzelements abweichenden Materialzusammensetzung ausgebildet sein.

Weiterhin wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, zumindest eine Materialzusammensetzung aufweist, welche wesentlich verschieden ist von einer, insbesondere mittleren, Materialzusammensetzung der Netzelemente außerhalb des Teilbereichs. Dadurch kann insbesondere eine im Belastungsfall vorteilhafte Kraftverteilung in dem Sicherheitsnetz ermöglicht werden, wodurch insbesondere zumindest eine Fangeigenschaft des Sicherheitsnetzes zum Auffangen zumindest eines dynamischen Einschlagskörpers optimiert werden kann. Zudem kann vorteilhaft eine Stabilität erhöht werden. Darunter, dass eine Materialzusammensetzung "wesentlich verschieden ist" von einer anderen Materialzusammensetzung, soll insbesondere verstanden werden, dass die Netzelemente in dem Teilbereich zumindest eine Materialzusammensetzung aufweisen, in welcher ein Massenanteil eines atomaren und/oder molekularen Hauptbestandteils zumindest um 0,1 Gew%, vorzugsweise zumindest um 0,5 Gew%, vorteilhaft zumindest um 1 Gew%, bevorzugt zumindest um 10 Gew% oder besonders bevorzugt zumindest um 99 Gew% von einem Massenanteil des gleichen Moleküls und/oder Atoms in der, insbesondere mittleren, Materialzusammensetzung der Netzelemente außerhalb des Teilbereichs abweicht. Unter einem "atomaren und/oder molekularen Hauptbestandteil" soll insbesondere ein Element und/oder Molekül verstanden werden, welches bei einer Herstellung gezielt einem Material, insbesondere mit dem Ziel zumindest eine Materialeigenschaft zu beeinflussen, beigemischt wurde. Insbesondere ist vorstellbar, dass ein Netzelement aus unterschiedlichen Komponenten mit verschiedenen Materialien besteht. Vorteilhaft könnte ein Netzelement, insbesondere in dem Teilbereich, eine Beschichtung, beispielsweise aus Kunststoff, aufweisen. Außerdem ist vorstellbar, dass zumindest ein Netzelement eine Mehrzahl an Drahtlitzen umfasst. Die Drahtlitzen können aus identischen Drähten gleichen Materials ausgebildet sein. Alternativ könnten die Drahtlitzen zumindest teilweise aus unterschiedlichen Drähten, insbesondere mit unterschiedlichen Materialzusammensetzungen, ausgebildet sein.

Ferner wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, zumindest eine Drahtwindung, insbesondere Drahtlitzenwindung, aufweist, deren Drahtdurchmesser wesentlich größer ist als ein mittlerer Drahtdurchmesser von Drahtwindungen, insbesondere Drahtlitzenwindungen, von Netzelementen außerhalb des Teilbereichs. Dadurch kann insbesondere eine im Belastungsfall vorteilhafte Kraftverteilung in dem Sicherheitsnetz ermöglicht werden, wodurch insbesondere zumindest eine Fangeigenschaft des Sicherheitsnetzes zum Auffangen zumindest eines dynamischen Einschlagskörpers optimiert werden kann. Zudem kann vorteilhaft eine Stabilität erhöht werden. Unter einer "Drahtwindung" soll insbesondere zumindest ein Teilstück eines Filaments, insbesondere eines Drahts, verstanden werden, welches genau einmal einen Umfang eines Netzelements beschreibt. Unter einer "Drahtlitzenwindung" soll insbesondere zumindest ein Teilstück einer Drahtlitze verstanden werden, welches genau einmal einen Umfang eines Netzelements beschreibt. Unter einem "mittleren Drahtdurchmesser" soll insbesondere ein Mittelwert der Drahtdurchmesser, insbesondere in einem senkrechten Querschnitt durch den Draht, einer zufälligen Auswahl einer Mehrzahl an, vorzugsweise aller, Netzelemente/n des Sicherheitsnetzes, insbesondere außerhalb des Teilbereichs, verstanden werden. Vorzugsweise ist der Drahtdurchmesser ein Durchmesser eines kleinsten Kreises, welcher sich um einen Querschnitt eines Filaments, insbesondere eines Drahts, legen lässt und dabei das Filament, insbesondere den Draht, vollständig umschließt. Unter einem "mittleren Drahtlitzendurchmesser" soll insbesondere ein Mittelwert der Drahtlitzendurchmesser, insbesondere in einem senkrechten Querschnitt durch die Drahtlitze, einer zufälligen Auswahl einer Mehrzahl an, vorzugsweise aller, Netzelemente/n des Sicherheitsnetzes, insbesondere außerhalb des Teilbereichs, verstanden werden. Vorzugsweise ist der Drahtlitzendurchmesser ein Durchmesser eines kleinsten Kreises, welcher sich um einen Querschnitt einer Drahtlitze legen lässt und dabei alle Drahtwindungen umschließt. Unter "wesentlich größer" soll in diesem Zusammenhang insbesondere verstanden werden, dass ein Durchmesser zumindest um 10 %, vorzugsweise zumindest um 20 %, vorteilhaft zumindest um 30 %, bevorzugt zumindest um 50 % und besonders bevorzugt zumindest um 100 % größer ist.

Außerdem wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, zumindest eine Anzahl an Drahtwindungen, insbesondere Drahtlitzenwindungen, aufweist, welche wesentlich von einer mittleren Anzahl von Drahtwindungen, insbesondere Drahtlitzenwindungen, von Netzelementen außerhalb des Teilbereichs abweicht. Dadurch kann insbesondere eine im Belastungsfall vorteilhafte Kraftverteilung in dem Sicherheitsnetz ermöglicht werden, wodurch insbesondere zumindest eine Fangeigenschaft des Sicherheitsnetzes zum Auffangen zumindest eines dynamischen Einschlagskörpers optimiert werden kann. Zudem kann vorteilhaft eine Stabilität erhöht werden. Unter einer "mittleren Anzahl von Drahtwindungen" soll insbesondere ein Mittelwert der Anzahl von Drahtwindungen einer zufälligen Auswahl einer Mehrzahl an, vorzugsweise aller, Netzelemente/n des Sicherheitsnetzes, insbesondere außerhalb des Teilbereichs, verstanden werden. Unter einer "mittleren Anzahl von Drahtlitzenwindungen" soll insbesondere ein Mittelwert der Anzahl von Drahtlitzenwindungen einer zufälligen Auswahl einer Mehrzahl an, vorzugsweise aller, Netzelemente/n des Sicherheitsnetzes, insbesondere außerhalb des Teilbereichs, verstanden werden. Unter einem "wesentlichen Abweichen" soll in diesem Zusammenhang insbesondere verstanden werden, dass eine Anzahl an Drahtwindungen, insbesondere Drahtlitzenwindungen, zumindest eines Netzelements in dem Teilbereich zumindest 200 %, vorzugsweise zumindest 100 %, bevorzugt zumindest 50 % und besonders bevorzugt zumindest 10 % von der mittleren Anzahl an Drahtwindungen, insbesondere Drahtlitzenwindungen, außerhalb des Teilbereichs abweicht. Insbesondere können alle Netzelemente des Teilbereichs eine im Wesentlichen identische Abweichung aufweisen. Alternativ weisen die Netzelemente des Teilbereichs zumindest teilweise eine unterschiedliche Abweichung auf. Vorzugsweise ist die Anzahl an Drahtwindungen, insbesondere Drahtlitzenwindungen, der Netzelemente in dem Teilbereich zumindest teilweise zumindest um 10 % größer, vorzugsweise zumindest um 50 % größer, bevorzugt zumindest 100 % größer oder besonders bevorzugt zumindest um 200 % größer als die Anzahl der Drahtwindungen, insbesondere Drahtlitzenwindungen, der Netzelemente außerhalb des Teilbereichs. Alternativ oder zusätzlich kann die Anzahl der Drahtwindungen, insbesondere der Drahtlitzenwindungen, in dem Teilbereich zumindest teilweise zumindest um 200 % kleiner, vorzugsweise zumindest um 100 % kleiner, bevorzugt zumindest um 50 % kleiner oder besonders bevorzugt zumindest um 10 % kleiner als die Anzahl der Drahtwindungen, insbesondere Drahtlitzenwindungen, der Netzelemente außerhalb des Teilbereichs sein.

Weiterhin wird vorgeschlagen, dass zumindest ein Netzelement zumindest eines in eine Richtung parallel zu einer Haupterstreckungsrichtung des Sicherheitsnetzes über den Innenbereich, insbesondere über eine Gesamterstreckung des Innenbereichs, überstehenden Teilbereichs des Sicherheitsnetzes, insbesondere eines Außenbereichs des Sicherheitsnetzes, zumindest einen Energieabsorber aufweist. Dadurch kann insbesondere eine im Belastungsfall vorteilhafte Kraftverteilung in dem Sicherheitsnetz ermöglicht werden, wodurch insbesondere zumindest eine Fangeigenschaft des Sicherheitsnetzes zum Auffangen zumindest eines dynamischen Einschlagskörpers optimiert werden kann. Zudem kann vorteilhaft eine Stabilität erhöht werden. Unter einem "Energieabsorber" soll insbesondere ein Element verstanden werden, welches dazu vorgesehen ist, zumindest einen Teil einer kinetischen Energie eines dynamischen Einschlagskörpers, insbesondere bei einem Einschlag des dynamischen Einschlagkörpers in das Sicherheitsnetz, in zumindest eine von der kinetischen Energie verschiedene Energieform, beispielsweise eine potentielle Energie und/oder thermische Energie, insbesondere Verformungsenergie und/oder innere Reibung, umzuwandeln. Ein Energieabsorber, welcher insbesondere zumindest eine Torsionsfeder umfassen kann, kann insbesondere zwischen zumindest zwei Netzelementen und oder zwischen zumindest einem Netzelement und zumindest einer Aufhängung, beispielsweise einem Seil, angeordnet sein.

Des Weiteren wird vorgeschlagen, dass der Energieabsorber einstückig mit dem zumindest einem Netzelement ausgebildet ist. Dadurch kann vorteilhaft eine einfache Konstruktion, insbesondere des Energieabsorbers, ermöglicht werden. Zudem kann vorteilhaft eine einfache Montage und/oder Integration des Energieabsorbers in das Sicherheitsnetz ermöglicht werden. Insbesondere kann der Energieabsorber als ein zumindest teilweise gewelltes und/oder gebuckeltes Netzelement ausgebildet sein, welches insbesondere unter Belastung dazu vorgesehen ist, sich auszudehnen. Alternativ ist vorstellbar, dass zumindest ein Teil eines Netzelements in Form einer Torsionsfeder gebogen ist und/oder durch eine Torsionsfeder ersetzt ist.

Ferner wird vorgeschlagen, dass zumindest ein Netzelement, insbesondere ein Netzelement in zumindest einem in eine Richtung parallel zu einer Haupterstreckungsrichtung des Sicherheitsnetzes über den Innenbereich, insbesondere über eine Gesamterstreckung des Innenbereichs, überstehenden Teilbereich des Sicherheitsnetzes, vorzugsweise einem Außenbereich des Sicherheitsnetzes, genau drei Anschlussbereiche zu benachbarten Netzelementen ausbildet. Dadurch kann insbesondere eine vorteilhafte Konstruktion des Sicherheitsnetzes ermöglicht werden, wodurch vorteilhaft eine Sicherheit erhöht werden kann, insbesondere hinsichtlich eines Auffangens von dynamischen Einschlagskörpern in dem Sicherheitsnetz. Vorteilhaft kann mittels der vorteilhaften Konstruktion eine Abfangfläche, in welcher dynamische Einschlagskörper sicher abgefangen werden können, vergrößert werden, insbesondere indem die Abfangfläche nach einem Einschlag des dynamischen Einschlagskörpers vorteilhaft groß gehalten werden kann. Unter einem "Anschlussbereich" soll insbesondere ein Bereich eines Netzelements und/oder eines Netzglieds, insbesondere eines in einem Sicherheitsnetz im Wesentlichen konzentrisch übereinanderliegenden Bündels von Netzelementen, verstanden werden, in welchem das Netzelement und/oder das Netzglied, insbesondere das Bündel von Netzelementen, insbesondere in einem fertig montierten Sicherheitsnetz, mit zumindest einem benachbarten Netzelement und/oder zumindest einem benachbarten Netzglied und/oder zumindest einem Bündel von Netzelementen überlappt. Das Netzelement und/oder das benachbarte Netzelement kann insbesondere als ein einzelnes Netzelement und/oder als ein Netzglied, insbesondere als ein Bündel von Netzelementen, ausgebildet sein. Vorzugsweise überlappt in dem Anschlussbereich das Netzelement und/oder das Netzglied, insbesondere das Bündel von Netzelementen, mit genau einem Netzelement und/oder mit genau einem Netzglied, insbesondere genau einem Bündel von Netzelementen. Vorzugsweise sind zumindest zwei der Anschlussbereiche, insbesondere in einem ausgebreiteten Zustand des Sicherheitsnetzes, relativ zu dem Netzelement einander diametral gegenüberliegend angeordnet. Insbesondere weisen die Anschlussbereiche jeweils einen Schwerpunkt auf. Die Schwerpunkte der Anschlussbereiche sind von einem Mittelpunkt des die genau drei Anschlussbereiche aufweisenden Netzelements aus gesehen, insbesondere in einem ausgebreiteten Zustand des Sicherheitsnetzes, in einem Winkel größer als 30°, vorzugsweise größer als 45°, vorteilhaft größer als 60°, bevorzugt größer als 75° und besonders bevorzugt größer als 85° zueinander angeordnet. Insbesondere ist jeder Anschlussbereich eines Netzelements überlappungsfrei zu jedem weiteren Anschlussbereich des Netzelements ausgebildet. Vorzugsweise weist, insbesondere in einem vollständig ausgebreiteten Zustand des Sicherheitsnetzes, zumindest ein zu dem Netzelement mit den genau drei Anschlussbereichen benachbartes weiteres Netzelement des Sicherheitsnetzes genau drei Anschlussbereiche auf. Bevorzugt weisen, insbesondere in einem vollständig ausgebreiteten Zustand des Sicherheitsnetzes, zumindest zwei zu dem Netzelement mit den genau drei Anschlussbereichen benachbarte zusätzliche weitere Netzelemente des Sicherheitsnetzes genau drei Anschlussbereiche auf.

Des Weiteren wird die erfindungsgemäße Netz- und Seilkonstruktion mit zumindest einem Sicherheitsnetz vorgeschlagen. Damit kann vorteilhaft ein hoher Grad an Sicherheit und/oder ein vorteilhaftes Verhalten in einem Einschlagfall erzielt werden. Vorzugsweise ist die Netz- und Seilkonstruktion eine Drahtnetz- und Drahtseilkonstruktion. Die Netz- und Seilkonstruktion kann beispielsweise eine Steinschlagschutzinstallation, ein Motorsportzaun, ein Fangzaun, ein Straßen- und/oder Schienensicherungsnetz, ein Lawinennetz, ein Geschossfangzaun, ein Fahrzeugfangzaun, insbesondere eine Flugzeugfangzauninstallation, ein Teststreckenschutznetz oder dergleichen sein.

Vorteilhaft weist die Netz- und Seilkonstruktion zumindest ein Führungsseil auf, welches durch zumindest jedes dritte, vorzugsweise jedes zweite, bevorzugt jedes Netzelement einer parallel zu einer Haupterstreckungsrichtung des Sicherheitsnetzes verlaufenden Reihe von Netzelementen an zumindest einer Außenkante des Sicherheitsnetzes hindurchgeführt ist. Das Führungsseil legt vorteilhaft einen Bewegungsfreiheitsgrad der Netzelemente fest. Dadurch kann, insbesondere im Einschlagsfall, eine vorteilhafte Dämpfung des Einschlags, insbesondere durch eine gerichtete Verschiebung zumindest eines Teils der Netzelemente des Sicherheitsnetzes, ermöglicht werden. Das Führungsseil ist insbesondere als ein Drahtseil ausgebildet. Das Führungsseil ist insbesondere mit zumindest einer Stütze, vorzugsweise zumindest zwei Stützen, der Netz- und Seilkonstruktion verbunden. Insbesondere ist die Stütze zu einer Halterung und/oder Aufhängung des Sicherheitsnetzes vorgesehen. Vorzugsweise ist die Stütze an zumindest einer Seite an einem Untergrund und/oder an einer Wand, vorzugsweise Felswand, befestigbar. Besonders bevorzugt erstreckt sich eine Haupterstreckung der Stütze in einem an dem Untergrund und/oder an der Wand, vorzugsweise Felswand, befestigten Zustand, insbesondere von einem Befestigungspunkt aus, im Wesentlichen senkrecht zu einer Schwerkraftrichtung. Unter der Wendung "zumindest jedes dritte" soll insbesondere verstanden werden, dass in der Reihe von benachbarten Netzelementen, insbesondere an der Außenkante des Sicherheitsnetzes, jedes Netzelement, welches frei ist von einer Hindurchführung des Führungsseils, höchstens ein benachbartes Netzelement der Reihe aufweist, welches ebenfalls frei ist von einer Hindurchführung des Führungsseils. Insbesondere ist die Reihe von Netzelementen frei von drei aufeinanderfolgenden benachbarten Netzelementen, welche frei sind von einer Hindurchführung des Führungsseils. Unter der Wendung "zumindest jedes zweite" soll insbesondere verstanden werden, dass in der Reihe von benachbarten Netzelementen, insbesondere an der Außenkante des Sicherheitsnetzes, jedes Netzelement, welches frei ist von einer Hindurchführung des Führungsseils, ausschließlich benachbarte Netzelemente der Reihe aufweist, durch welche das Führungsseil hindurchgeführt ist. Insbesondere ist die Reihe von Netzelementen frei von zwei aufeinanderfolgenden benachbarten Netzelementen, welche frei sind von einer Hindurchführung des Führungsseils. Die Außenkante des Sicherheitsnetzes ist insbesondere durch eine Seite der äußersten Reihe von Netzelementen, welche frei ist von benachbarten Netzelementen, ausgebildet. Vorzugsweise weist die Netz- und Seilkonstruktion an zumindest zwei voneinander verschiedenen Außenkanten zumindest ein Führungsseil auf.

Zudem wird vorgeschlagen, dass das Führungsseil als zumindest ein Tragseil ausgebildet ist, welches insbesondere dazu vorgesehen ist, das Sicherheitsnetz zu tragen und/oder im Fall einer Belastung, insbesondere durch Schutt und/oder zumindest einen weiteren dynamischen Einschlagskörper, zumindest einen wesentlichen Teil der Belastung aufzunehmen und/oder, vorzugsweise an zumindest eine Stütze, zu übertragen. Dadurch kann vorteilhaft eine einfache Konstruktion ermöglicht werden, insbesondere indem auf zusätzliche Führungsseile, Laufseile und/oder weitere zusätzliche Aufhängungen verzichtet werden kann. Dadurch können vorteilhaft Kosten, insbesondere Montage- und/oder Materialkosten, eingespart werden. Vorzugsweise ist das Tragseil als ein Drahtseil ausgebildet. Zudem ist denkbar, dass das Tragseil als ein Seilbündel ausgebildet ist, welches aus zumindest zwei Tragseilen besteht, wodurch vorteilhaft eine Sicherheit und/oder Stabilität weiter verbessert werden kann.

Das Sicherheitsnetz ist vorteilhaft als ein Auffangnetz in der erfindungsgemäßen Netz- und Seilkonstruktion verwendbar. Vorzugsweise umfasst die Netz- und Seilkonstruktion eine Mehrzahl von Sicherheitsnetzen, welche insbesondere über Seile, vorzugsweise Tragseile, und/oder über Schäkel miteinander verbunden sind.

Die erfindungsgemäße Netz- und Seilkonstruktion soll hierbei nicht auf die oben beschriebene Anwendung und Ausführungsform beschränkt sein. Insbesondere kann die erfindungsgemäße Netz- und Seilkonstruktion zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Zudem sollen bei den in dieser Offenbarung angegebenen Wertebereichen auch innerhalb der genannten Grenzen liegende Werte als offenbart und als beliebig einsetzbar gelten.

Es zeigen:
- Fig. 1: eine schematische Draufsicht auf ein Sicherheitsnetz,
- Fig. 2: eine schematische Draufsicht auf ein alternatives Sicherheitsnetz,
- Fig. 3: eine schematische Draufsicht auf ein weiteres alternatives Sicherheitsnetz, das nicht Teil der erfindungsgemäßen Netz- und Seilkonstruktion ist,
- Fig. 4: eine schematische Schnittansicht durch Netzelemente eines Teils des Sicherheitsnetzes,
- Fig. 5: eine schematische Draufsicht auf einen Teil einer erfindungsgemäßen Netz- und Seilkonstruktion mit dem Sicherheitsnetz,
- Fig. 6: eine schematische Ansicht von Teilen von Netzelementen mit einer Sollbruchstelle,
- Fig. 7: eine schematische Ansicht von alternativen Netzelementen mit Energieabsorbern,
- Fig. 8: eine schematische Schnittansicht durch Netzelemente eines Teils eines alternativen Sicherheitsnetzes,
- Fig. 9: eine schematische Schnittansicht durch Netzelemente eines Teils eines weiteren alternativen Sicherheitsnetzes,
- Fig. 10: eine schematische Schnittansicht durch Netzelemente eines Teils eines zusätzlichen weiteren alternativen Sicherheitsnetzes und
- Fig. 11: eine schematische Draufsicht auf ein zweites zusätzliches weiteres alternatives Sicherheitsnetz.

### Beschreibung der Ausführungsbeispiele

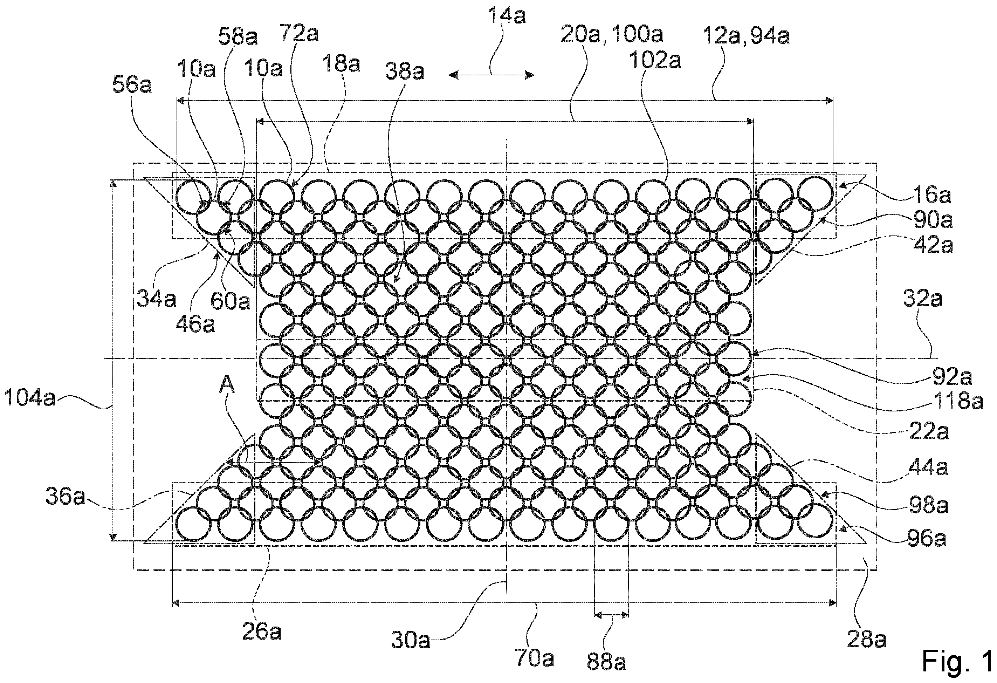

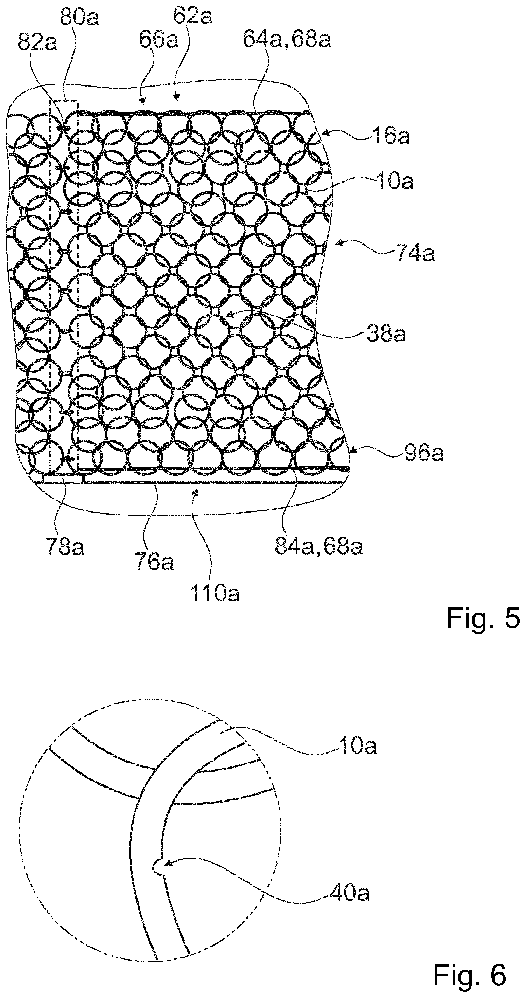

Fig. 1 zeigt ein Sicherheitsnetz. Das Sicherheitsnetz ist entlang einer Haupterstreckungsebene 28a ausgebreitet. Das Sicherheitsnetz dient zu einem Auffangen schwerer Lasten. Das Sicherheitsnetz ist aus Netzelementen 10a gebildet. Die Netzelemente 10a sind als Ringe 102a ausgebildet. Die Netzelemente 10a sind im Wesentlichen identisch ausgebildet. Die Netzelemente 10a weisen einen Netzelementdurchmesser 88a auf. Die Netzelemente 10a greifen in benachbarte Netzelemente 10a ein. Zwei ineinandergreifende Netzelemente 10a bilden einen Anschlussbereich 56a, 58a, 60a aus. Zumindest ein Netzelemente 10a des Sicherheitsnetzes bildet genau drei Anschlussbereiche 56a, 58a, 60a zu benachbarten Netzelementen 10a aus. Die Netzelemente 10a bilden senkrecht zu einer Haupterstreckungsrichtung 14a des Sicherheitsnetzes nebeneinanderliegende Reihen von Netzelementen 10a aus. Die Netzelemente 10a einer Reihe sind zueinander überlappungsfrei. Netzelemente 10a einer Reihe überlappen mit Netzelementen 10a benachbarter Reihen. Netzelemente 10a einer Reihe greifen in Netzelemente 10a benachbarter Reihen ein. Es ist denkbar, dass zumindest ein Netzelement 10a eine Sollbruchstelle 40a aufweist (vgl. Fig. 6).

Das Sicherheitsnetz weist einen Außenbereich 18a auf. Der Außenbereich 18a umfasst eine äußerste Reihe 16a von Netzelementen 10a. Der Außenbereich 18a umfasst zwei Reihen von Netzelementen 10a. Der Außenbereich 18a erstreckt sich über alle Netzelemente 10a einer äußersten Reihe 16a von Netzelementen 10a. Der Außenbereich 18a erstreckt sich über alle Netzelemente 10a einer weiteren, von der äußersten Reihe 16a verschiedenen Reihe 90a von Netzelementen 10a. Das Sicherheitsnetz weist eine maximale Gesamterstreckung 94a auf. Die maximale Gesamterstreckung 94a verläuft parallel zu der Haupterstreckungsrichtung 14a des Sicherheitsnetzes. Das Sicherheitsnetz weist eine innerhalb des Außenbereichs 18a liegende maximale Gesamterstreckung 12a auf. Die innerhalb des Außenbereichs 18a liegende maximale Gesamterstreckung 12a und die maximale Gesamterstreckung 94a des Sicherheitsnetzes sind zueinander identisch.

Das Sicherheitsnetz weist einen weiteren Außenbereich 26a auf. Der weitere Außenbereich 26a ist von dem Außenbereich 18a verschieden ausgebildet. Der weitere Außenbereich 26a und der Außenbereich 18a sind zueinander überlappungsfrei. Der weitere Außenbereich 26a erstreckt sich über alle Netzelemente 10a einer weiteren äußersten Reihe 96a von Netzelementen 10a. Der weitere Außenbereich 26a erstreckt sich über alle Netzelemente 10a einer zusätzlichen, von der weiteren äußersten Reihe 96a verschiedenen Reihe 98a von Netzelementen 10a. Das Sicherheitsnetz weist eine innerhalb des weiteren Außenbereichs 26a liegende maximale Gesamterstreckung 70a auf. Die innerhalb des weiteren Außenbereichs 26a liegende maximale Gesamterstreckung 70a und die maximale Gesamterstreckung 94a des Sicherheitsnetzes sind zueinander identisch.

Das Sicherheitsnetz weist einen Innenbereich 22a auf. Der Innenbereich 22a ist überlappungsfrei zu dem Außenbereich 18a und zu dem weiteren Außenbereich 26a. Der Innenbereich 22a umfasst eine innere Reihe 92a von Netzelementen 10a. Der Innenbereich 22a umfasst eine weitere der inneren Reihe 92a benachbarte innere Reihe 118a von Netzelementen 10a. Die innere Reihe 92a liegt im Zentrum des Sicherheitsnetzes. Die innere Reihe 92a liegt zwischen der äußersten Reihe 16a und der weiteren äußersten Reihe 96a. Das Sicherheitsnetz weist eine minimale Gesamterstreckung 100a auf. Die minimale Gesamterstreckung 100a verläuft parallel zu der Haupterstreckungsrichtung 14a des Sicherheitsnetzes. Das Sicherheitsnetz weist eine innerhalb des Innenbereichs 22a liegende minimale Gesamterstreckung 20a auf. Die innerhalb des Innenbereichs 22a liegende minimale Gesamterstreckung 20a und die minimale Gesamterstreckung 100a des Sicherheitsnetzes sind zueinander identisch. Die innerhalb des Außenbereichs 18a, 26a liegende maximale Gesamterstreckung 12a und/oder die maximale Gesamterstreckung 94a ist größer als die innerhalb des Innenbereichs 22a liegende minimale Gesamterstreckung 20a und/oder die minimale Gesamterstreckung 100a des Sicherheitsnetzes. Die innerhalb des Außenbereichs 18a, 26a liegende maximale Gesamterstreckung 12a und/oder die maximale Gesamterstreckung 94a des Sicherheitsnetzes ist zumindest um einen mittleren Durchmesser der Netzelemente 10a des Sicherheitsnetzes größer als die innerhalb des Innenbereichs 22a liegende minimale Gesamterstreckung 20a und/oder die minimale Gesamterstreckung 100a des Sicherheitsnetzes. In dem in Figur 1 gezeigten Ausführungsbeispiel entspricht der mittlere Durchmesser der Netzelemente 10a dem Netzelementdurchmesser 88a. Ein Größenunterschied zwischen der maximalen Gesamterstreckung 12a, 94a und der minimalen Gesamterstreckung 20a, 100a ist größer als ein Vierfaches der Netzelementdurchmesser 88a. Es ist denkbar, dass zumindest ein Netzelement 10a in dem Außenbereich 18a, dem weiteren Außenbereich 26a und/oder dem Innenbereich 22a eine Sollbruchstelle 40a aufweist.

Das Sicherheitsnetz weist zwei Spiegelebenen 30a, 32a auf. Die Spiegelebenen 30a, 32a sind senkrecht zu einer Haupterstreckungsebene 28a des Sicherheitsnetzes angeordnet. Eine Spiegelebene 30a steht senkrecht zu der Haupterstreckungsrichtung 14a. Eine Spiegelebene 32a steht parallel zu der Haupterstreckungsrichtung 14a. Die Netzelemente 10a sind spiegelsymmetrisch zu den Spiegelebenen 30a, 32a angeordnet. Das Sicherheitsnetz weist eine konstante Gesamterstreckung 104a in eine in der Haupterstreckungsebene 28a liegende Richtung senkrecht zu der Haupterstreckungsrichtung 14a auf.

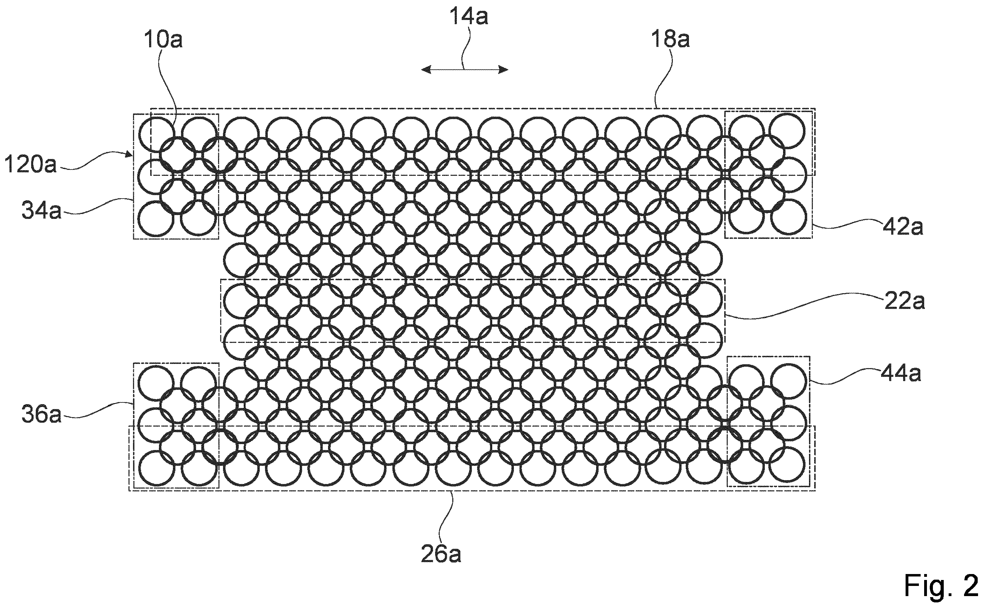

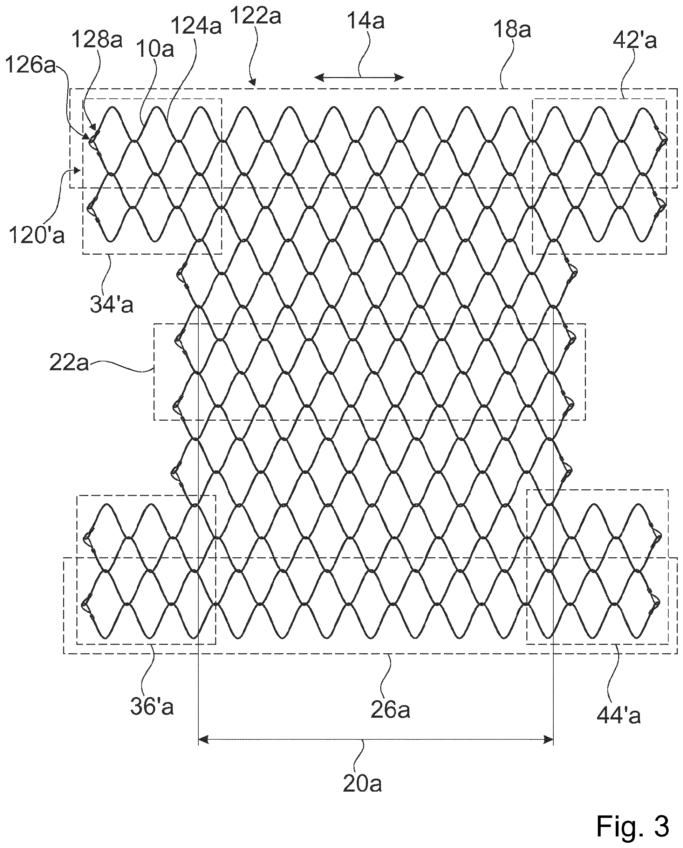

Das Sicherheitsnetz weist vier in eine Richtung parallel zu einer Haupterstreckungsrichtung 14a des Sicherheitsnetzes über die minimale Gesamterstreckung 20a des Innenbereichs 22a überstehende Teilbereiche 34a, 36a, 42a, 44a auf. Der Teilbereich 34a, 36a, 42a, 44a weist sechs Netzelemente 10a auf. Der Teilbereich 34a, 36a, 42a, 44a des Sicherheitsnetzes weist eine Anzahl von in der Haupterstreckungsrichtung 14a des Sicherheitsnetzes nebeneinander in einer Reihe angeordneten Netzelementen 10a auf, welche zwei Siebzehntel einer maximalen Anzahl aller nebeneinander senkrecht zur Haupterstreckungsrichtung 14a des Sicherheitsnetzes angeordneten Reihen von Netzelementen 10a entspricht. Der Teilbereich 34a, 36a, 42a, 44a des Sicherheitsnetzes weist eine Anzahl von senkrecht zu der Haupterstreckungsrichtung 14a des Sicherheitsnetzes nebeneinander in einer Reihe angeordneten Netzelementen 10a auf, welche zwei Siebzehntel der maximalen Anzahl aller nebeneinander senkrecht zur Haupterstreckungsrichtung 14a des Sicherheitsnetzes angeordneten Reihen von Netzelementen 10a entspricht. Der Teilbereich 34a, 36a, 42a, 44a des Sicherheitsnetzes weist eine dreiecksförmige Anordnung 46a von Netzelementen 10a auf. Alternativ kann zumindest einer der Teilbereiche 34a, 36a, 42a, 44a eine von der dreiecksförmigen Anordnung 46a abweichende Anordnung aufweisen, beispielsweise eine zumindest rechteckige Anordnung 120a (vgl. Fig. 2) und/oder eine zumindest teilweise polygonale Anordnung. Ein Netzelement 10a in dem Teilbereich 34a, 36a, 42a, 44a des Sicherheitsnetzes weist in einem Testversuch eine Reißfestigkeit auf, welche von einer mittleren Reißfestigkeit von Netzelementen 10a außerhalb des Teilbereichs 34a, 36a, 42a, 44a abweicht. Alternativ können alle Netzelemente 10a in dem Testversuch eine im Wesentlichen identische Reißfestigkeit aufweisen. Es ist denkbar, dass zumindest ein Netzelement 10a in zumindest einem der Teilbereiche 34a, 36a, 42a, 44a eine Sollbruchstelle 40a aufweist. Alternativ kann das Sicherheitsnetz als ein Maschennetz 122a ausgebildet sein (vgl. Fig. 3). Das Maschennetz 122a ist aus ineinandergreifenden Wendeln 124a ausgebildet. Die Wendel 124a weisen an den Enden zumindest einen eine Schlaufe 126a bildenden Knoten 128a auf. Schlaufen 126a benachbarter Wendel 124a greifen ineinander ein. Das aus Wendeln 124a ausgebildete Sicherheitsnetz weist vier in eine Richtung parallel zu einer Haupterstreckungsrichtung 14a des Sicherheitsnetzes über die minimale Gesamterstreckung 20a des Innenbereichs 22a überstehende Teilbereiche 34'a, 36'a, 42'a, 44'a auf. Die Teilbereiche 34'a, 36'a, 42'a, 44'a des aus Wendeln 122a ausgebildeten Sicherheitsnetzes weisen eine rechteckige Anordnung 120'a von Netzelementen 10a auf.

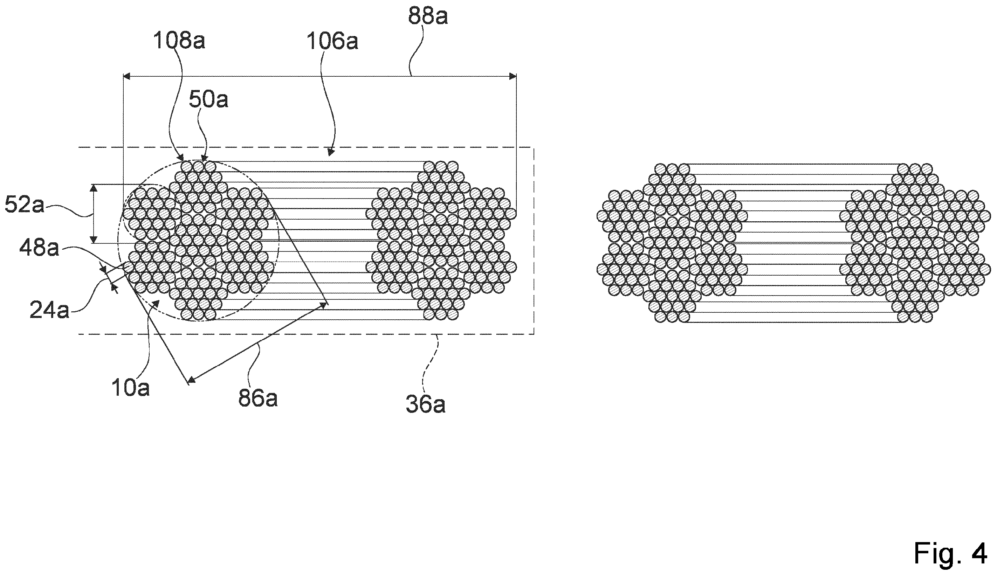

Fig. 4 zeigt einen Schnitt durch einen Teil des Sicherheitsnetzes entlang einer Schnittachse A (vgl. Fig. 1). Das auf einer linken Seite von Fig. 4 gezeigte Netzelement 10a liegt innerhalb des Teilbereichs 36a. Das auf einer rechten Seite von Fig. 4 gezeigte Netzelement 10a liegt außerhalb des Teilbereichs 36a. Das in Fig. 4 gezeigte Netzelement 10a ist als ein Drahtseil 106a ausgebildet. Das Netzelement 10a weist einen Netzelementquerschnittdurchmesser 86a auf. Der Netzelementquerschnittdurchmesser 86a ist konstant über einen Umfang 72a des Netzelements 10a. Das Drahtseil 106a weist eine Mehrzahl an Drahtwindungen 48a auf. Die Drahtwindungen 48a weisen einen Drahtdurchmesser 24a auf. Der Drahtdurchmesser 24a ist konstant über den Umfang 72 des Netzelements 10a. Der Netzelementquerschnittdurchmesser 86a entspricht einem Vielfachen des Drahtdurchmessers 24a. Das Netzelement 10a weist eine Drahtlitze 108a auf. Die Drahtlitze 108a weist 19 Drahtwindungen 48a auf. Die Drahtlitze 108a weist einen Drahtlitzendurchmesser 52a auf. Der Drahtlitzendurchmesser 52a ist konstant über den Umfang 72a des Netzelements 10a. Der Netzelementquerschnittdurchmesser 86a entspricht einem Vielfachen des Drahtlitzendurchmessers 52a. Das Netzelement 10a weist sieben Drahtlitzenwindungen 50a auf.

Fig. 5 zeigt einen Teil einer Netz- und Seilkonstruktion 62a mit dem Sicherheitsnetz. Das Sicherheitsnetz wird als ein Auffangnetz 74a in der Netz- und Seilkonstruktion 62a verwendet. Das Auffangnetz 74a ist zu einem Auffangen eines dynamischen Einschlagkörpers in einer Abfangfläche 38a des Auffangnetzes 74a vorgesehen. Das Auffangnetz 74a ist so positioniert, dass eine Haupteinschlagrichtung eines dynamischen Einschlagkörpers senkrecht zu der Abfangfläche 38a steht. In Fig. 5 zeigt die Haupteinschlagrichtung eines dynamischen Einschlagskörpers in die Bildebene hinein oder aus der Bildebene heraus. Erfindungsgemäß sind die Netzelemente 10a der Teilbereiche 34a, 36a, 42a, 44a im montierten, unbelasteten Zustand zusammengeschoben. In Haupterstreckungsrichtung 14a außenliegende Netzelemente 10a des Sicherheitsnetzes weisen zumindest teilweise Schäkel 82a auf. Mittels der Schäkel 82a sind Netzelemente 10a des Sicherheitsnetzes mit Netzelementen 10a eines weiteren, benachbarten Sicherheitsnetzes verschäkelt. Die Netz- und Seilkonstruktion 62a weist eine Stütze 80a auf. Die Netz- und Seilkonstruktion 62a weist ein Wandbefestigungselement 78a auf. Das Wandbefestigungselement 78a ist dazu vorgesehen, die Stütze 80a an einer Wand 76a zu befestigen.

Die Netz- und Seilkonstruktion 62a weist ein erstes Führungsseil 64a auf. Das erste Führungsseil 64a ist an einer der Wand 76a, insbesondere dem Wandbefestigungselement 78a, abgewandten Seite des Sicherheitsnetzes angeordnet. Das erste Führungsseil 64a ist an einer der Wand 76a, insbesondere dem Wandbefestigungselement 78a, abgewandten Seite der Stütze 80a angeordnet. Das erste Führungsseil 64a ist mit der Stütze 80a verbunden. Die Netz- und Seilkonstruktion 62a weist ein zweites Führungsseil 84a auf. Das zweite Führungsseil 84a ist an einer der Wand 76a, insbesondere dem Wandbefestigungselement 78a, zugewandten Seite des Sicherheitsnetzes angeordnet. Das zweite Führungsseil 84a ist an einer der Wand 76a, insbesondere dem Wandbefestigungselement 78a, zugewandten Seite der Stütze 80a angeordnet. Das zweite Führungsseil 84a ist mit der Stütze 80a verbunden.

Das Sicherheitsnetz weist in eine Richtung senkrecht zu der Haupterstreckungsrichtung 14a des Sicherheitsnetzes zwei Außenkanten 66a, 110a auf. Die Netzelemente 10a an den Außenkanten 66a, 110a bilden die zwei äußersten Reihen 16a, 96a. Das erste Führungsseil 64a ist durch die Netzelemente 10a der äußersten Reihe 16a hindurchgeführt. Das zweite Führungsseil 84a ist durch die Netzelemente 10a der weiteren äußersten Reihe 96a hindurchgeführt. Das erste Führungsseil 64a ist als ein Tragseil 68a ausgebildet. Das zweite Führungsseil 84a ist als ein Tragseil 68a ausgebildet.

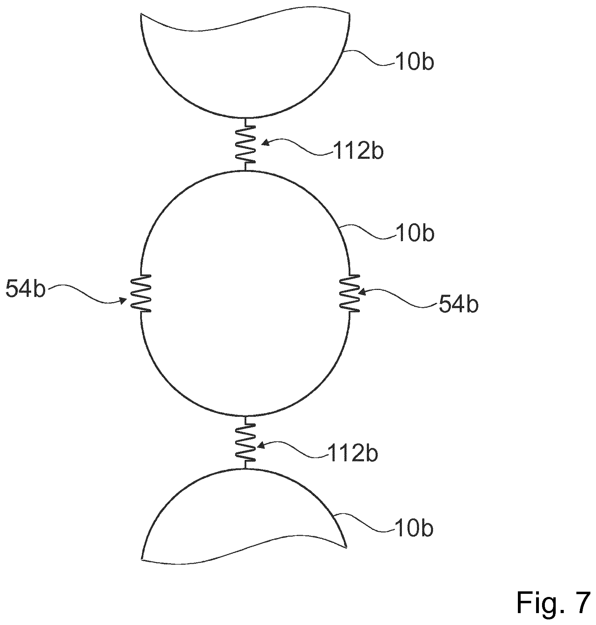

In den Figuren 7 bis 11 sind fünf weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 11 ist der Buchstabe a durch die Buchstaben b bis f ersetzt.

Fig. 7 zeigt ein Netzelement 10b. Das Netzelement 10b weist einen Energieabsorber 54b auf. Der Energieabsorber 54b ist einstückig mit dem Netzelement 10b ausgebildet. Der Energieabsorber 54b ist als gewellter Bereich des Netzelements 10b ausgebildet. Alternativ könnte der Energieabsorber 54b als, insbesondere spiralförmig, verdrehter Bereich des Netzelements 10b und/oder als Bereich mit einem vom Rest des Netzelements 10b abweichenden, insbesondere federelastischen, Material ausgebildet sein. Das Netzelement 10b weist einen weiteren Energieabsorber 112b auf. Der weitere Energieabsorber 112b ist getrennt von dem Netzelement 10b ausgebildet. Der weitere Energieabsorber 112b ist zwischen zwei benachbarten, überlappungsfreien, Netzelementen 10b angeordnet. Der weitere Energieabsorber 112b ist als federelastisches, gebogenes Element ausgebildet. Das Netzelement 10b mit den Energieabsorbern 54b, 112b ist in einem Teilbereich 34b, 36b, 42b, 44b des Sicherheitsnetzes angeordnet. Alternativ ist denkbar, dass das Netzelement 10b mit den Energieabsorbern 54b, 112b in einem von dem Teilbereich 34b, 36b, 42b, 44b verschiedenen Bereich des Sicherheitsnetzes, beispielsweise einem Innenbereich 22b und/oder einem von dem Teilbereich 34b, 36b, 42b, 44b verschiedenen Bereich eines Außenbereichs 18b, 26b des Sicherheitsnetzes angeordnet ist.

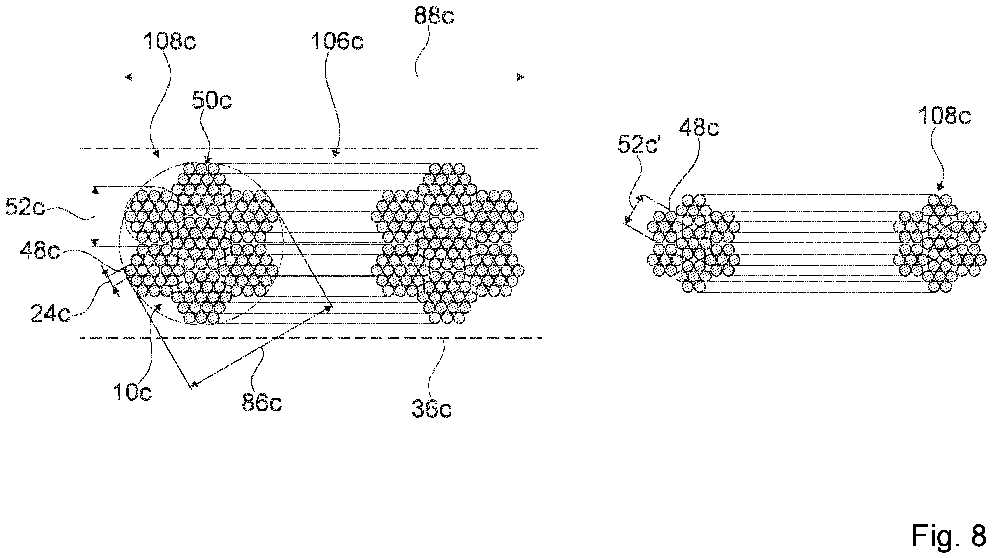

Der in einer Schnittansicht in Fig. 8 gezeigte Ausschnitt eines Sicherheitsnetzes zeigt zwei Netzelemente 10c. Das auf einer linken Seite von Fig. 8 gezeigte Netzelement 10c liegt innerhalb eines Teilbereichs 36c des Sicherheitsnetzes. Das auf einer rechten Seite von Fig. 8 gezeigte Netzelement 10c liegt außerhalb des Teilbereichs 36c. Das Netzelement 10c innerhalb des Teilbereichs 36c weist eine Anzahl an Drahtwindungen 48c auf, welche von der Anzahl an Drahtwindungen 48c des Netzelements 10c außerhalb des Teilbereichs 36c abweicht. Das Netzelement 10c innerhalb des Teilbereichs 36c weist eine größere Anzahl an Drahtwindungen 48c auf als das Netzelement 10c außerhalb des Teilbereichs 36c. Alternativ ist denkbar, dass das Netzelement 10c innerhalb des Teilbereichs 36c eine kleinere Anzahl an Drahtwindungen 48c aufweist als das Netzelement 10c außerhalb des Teilbereichs 36c. Das Netzelement 10c weist eine Drahtlitze 108c auf. Die Drahtlitze 108c weist eine Mehrzahl an Drahtlitzenwindungen 50c auf. Die Drahtlitzenwindung 50c weist einen Drahtlitzendurchmesser 52c auf. Der Drahtlitzendurchmesser 52c des Netzelements 10c in dem Teilbereich 36c ist größer als ein Drahtlitzendurchmesser 52'c eines Netzelements 10c außerhalb des Teilbereichs 36c. Alternativ könnte der Drahtlitzendurchmesser 52c des Netzelements 10c in dem Teilbereich 36c größer sein als der Drahtlitzendurchmesser 52'c des Netzelements 10c außerhalb des Teilbereichs 36c.

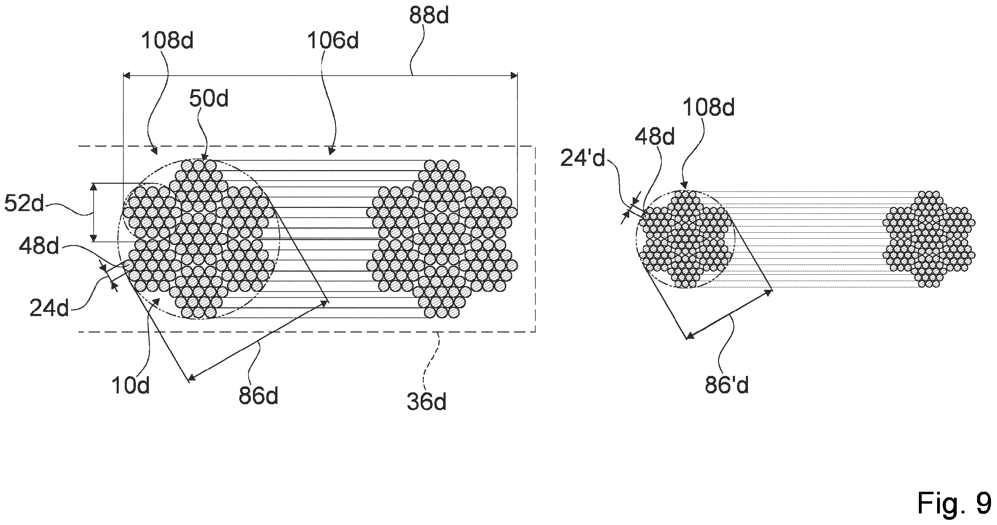

Der in einer Schnittansicht in Fig. 9 gezeigte Ausschnitt eines Sicherheitsnetzes zeigt zwei Netzelemente 10d. Das auf einer linken Seite von Fig. 9 gezeigte Netzelement 10d liegt innerhalb eines Teilbereichs 36d des Sicherheitsnetzes. Das auf einer rechten Seite von Fig. 9 gezeigte Netzelement 10d liegt außerhalb eines Teilbereichs 36d. Das Netzelement 10d weist eine Drahtwindung 48d auf. Die Drahtwindung 48d weist einen Drahtdurchmesser 24d auf. Der Drahtdurchmesser 24d einer Drahtwindung 48d innerhalb des Teilbereichs 36d ist größer ist als ein mittlerer Drahtdurchmesser 24'd von Drahtwindungen 48d von Netzelementen 10d außerhalb des Teilbereichs 36d. Alternativ ist denkbar, dass das Netzelement 10d innerhalb des Teilbereichs 36d einen kleineren Drahtdurchmesser 24d der Drahtwindung 48d aufweist als das Netzelement 10d außerhalb des Teilbereichs 36d. Das Netzelement 10d weist einen Netzelementquerschnittdurchmesser 86d auf. Der Netzelementquerschnittdurchmesser 86d des Netzelements 10d innerhalb des Teilbereichs 36d ist größer als ein Netzelementquerschnittdurchmesser 86'd eines Netzelements 10d außerhalb des Teilbereichs 36d. Alternativ könnte der Netzelementquerschnittdurchmesser 86d des Netzelements 10d innerhalb des Teilbereichs 36d kleiner als der Netzelementquerschnittdurchmesser 86'd des Netzelements 10d außerhalb des Teilbereichs 36d sein.

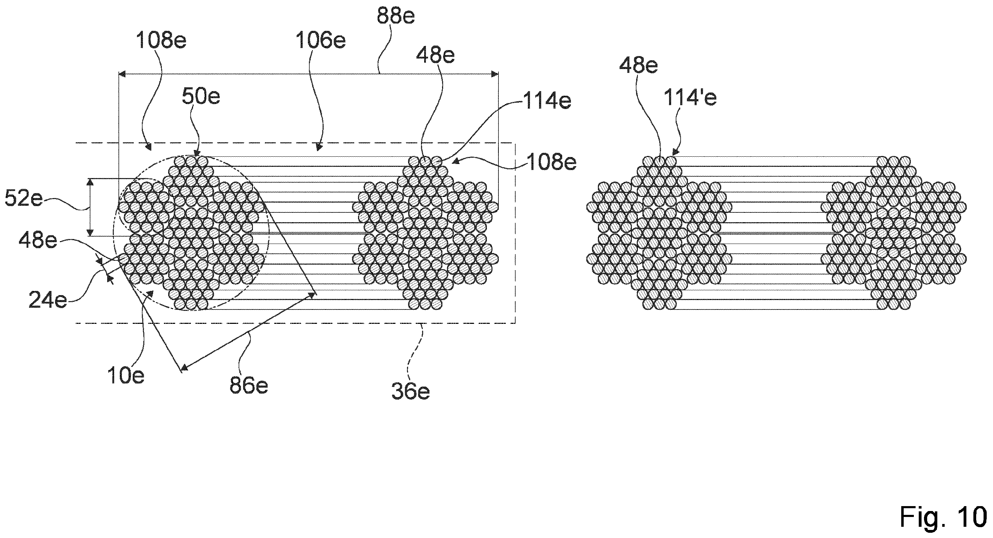

Der in einer Schnittansicht in Fig. 10 gezeigte Ausschnitt eines Sicherheitsnetzes zeigt zwei Netzelemente 10e. Das auf einer linken Seite von Fig. 10 gezeigte Netzelement 10e liegt innerhalb eines Teilbereichs 36e. Das auf einer rechten Seite von Fig. 10 gezeigte Netzelement 10e liegt außerhalb des Teilbereichs 36e. Das Netzelement 10e in dem Teilbereich 36e weist eine Materialzusammensetzung 114e auf. Die Materialzusammensetzung 114e von Netzelementen 10e in dem Teilbereich 36e ist verschieden von einer Materialzusammensetzung 114'e der Netzelemente 10e außerhalb des Teilbereichs 36e.

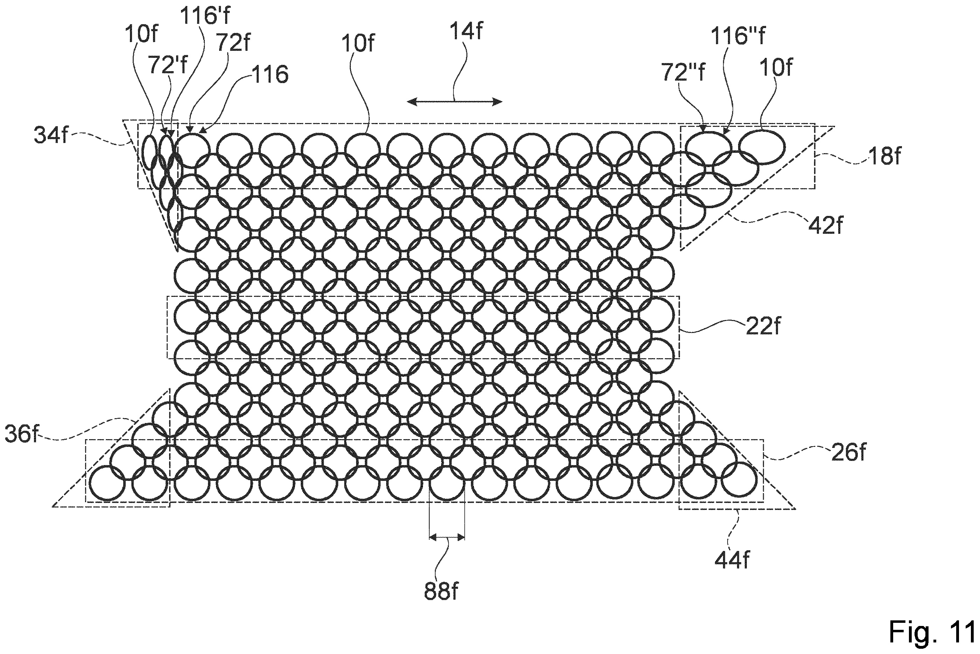

Fig. 11 zeigt ein Sicherheitsnetz mit Netzelementen 10f. Die Netzelemente 10f weisen einen Umfang 72f auf. Die Netzelemente 10f weisen eine Außenform 116f auf. Ein Umfang 72'f, 72"f eines Netzelements 10f innerhalb eines Teilbereichs 34f, 42f des Sicherheitsnetzes weicht wesentlich von einem mittleren Umfang 72f von Netzelementen 10f außerhalb des Teilbereichs 34f, 42f ab. Der Umfang 72'f eines Netzelements 10f in dem Teilbereich 34f ist kleiner als der Umfang 72f, 72"f eines Netzelements 10f außerhalb des Teilbereichs 34f. Der Umfang 72"f eines Netzelements 10f in dem Teilbereich 42f ist größer als der Umfang 72f, 72'f eines Netzelements 10f außerhalb des Teilbereichs 42f. Eine Außenform 116'f, 116"f eines Netzelements 10f in dem Teilbereich 34f, 42f weicht wesentlich von einer mittleren Außenform 116f der Netzelemente 10f außerhalb des Teilbereichs 34f, 42f ab.

## Patentansprüche

1. Netz- und Seilkonstruktion (62a-f) mit einem Sicherheitsnetz im montierten Zustand, wobei das Sicherheitsnetz zumindest zu einem Großteil aus ineinandergreifenden Netzelementen (10a-f) gebildet ist, wobei die Netzelemente (10a-f) in sich geschlossene filamentartige Gebilde sind, wobei eine maximale Gesamterstreckung (12a-f) des Sicherheitsnetzes parallel zu einer Haupterstreckungsrichtung (14a-f) des Sicherheitsnetzes in einem zumindest eine äußerste Reihe (16a-f) von Netzelementen (10a-f) umfassenden Außenbereich (18a-f) des Sicherheitsnetzes wesentlich größer ist als eine minimale Gesamterstreckung (20a-f) des Sicherheitsnetzes parallel zu der Haupterstreckungsrichtung (14a-f) in einem von dem Außenbereich (18a-f) verschiedenen Innenbereich (22a-f) des Sicherheitsnetzes, wobei die Gesamterstreckungen (12a-f; 20a-f) bei einem vollständig flach ausgebreiteten und von inneren Spannungen freien Sicherheitsnetz gemessen sind, **dadurch gekennzeichnet, dass** der Außenbereich (18a-f) an zumindest einer Außenkante (66a-f, 110a-f) eine Mehrzahl an, in der Haupterstreckungsrichtung (14a-f) über die minimale Gesamterstreckung (20a-f) des Sicherheitsnetzes hinaus stehende, Weg gebende und im montierten, unbelasteten Zustand zusammengeschobene Netzelemente (10a-f) aufweist, an welchen das Sicherheitsnetz in der Netz- und Seilkonstruktion (62a-f) aufgehängt ist und die in einem Belastungsfall dazu vorgesehen sind, einen zusätzlichen Pufferweg zu schaffen.

2. Netz- und Seilkonstruktion (62a-f) nach Anspruch 1, **dadurch gekennzeichnet, dass** die maximale Gesamterstreckung (12a-f) des Sicherheitsnetzes parallel zu der Haupterstreckungsrichtung (14a-f) des Sicherheitsnetzes in dem Außenbereich (18a-f) zumindest um einen mittleren Durchmesser der Netzelemente (10a-f) des Sicherheitsnetzes größer ist als die minimale Gesamterstreckung (20a-f) des Sicherheitsnetzes parallel zu der Haupterstreckungsrichtung (14a-f) in dem von dem Außenbereich (18a-f) verschiedenen Innenbereich (22a-f).

3. Netz- und Seilkonstruktion (62a-f) nach Anspruch 1 oder 2, **dadurch gekennzeichnet, dass** eine maximale Gesamterstreckung (70a-f) des Sicherheitsnetzes parallel zu der Haupterstreckungsrichtung (14a-f) des Sicherheitsnetzes in einem von dem Außenbereich (18a-f) verschiedenen weiteren Außenbereich (26a-f) des Sicherheitsnetzes größer ist als die minimale Gesamterstreckung (20a-f) des Sicherheitsnetzes parallel zu der Haupterstreckungsrichtung (14a-f) in dem von dem Außenbereich (18a-f) und dem weiteren Außenbereich (26a-f) verschiedenen Innenbereich (22a-f) des Sicherheitsnetzes.

4. Netz- und Seilkonstruktion (62a-f) nach einem der vorhergehenden Ansprüche, **dadurch gekennzeichnet, dass** die Netzelemente (10a-f) spiegelsymmetrisch zu einer, zu einer Haupterstreckungsebene (28a-f) des Sicherheitsnetzes zumindest im Wesentlichen senkrechten Spiegelebene (30a-f, 32a-f) angeordnet sind.

5. Netz- und Seilkonstruktion (62a-f) nach einem der vorhergehenden Ansprüche, **dadurch gekennzeichnet, dass** zumindest ein in eine Richtung parallel zu der Haupterstreckungsrichtung (14a-f) des Sicherheitsnetzes über den Innenbereich (22a-f) überstehender Teilbereich (34a-f, 36a-f, 42a-f, 44a-f) des Sicherheitsnetzes zumindest vier Netzelemente (10a-f) aufweist.

6. Netz- und Seilkonstruktion (62a-f) nach einem der vorhergehenden Ansprüche, **dadurch gekennzeichnet, dass** zumindest ein in eine Richtung parallel zu einer Haupterstreckungsrichtung (14a-f) des Sicherheitsnetzes über den Innenbereich (22a-f) überstehender Teilbereich (34a-f, 36a-f, 42a-f, 44a-f) des Sicherheitsnetzes eine Anzahl von in der Haupterstreckungsrichtung (14a-f) des Sicherheitsnetzes nebeneinander in einer Reihe angeordneten Netzelementen (10a-f) aufweist, welche zumindest einem Zwanzigstel einer maximalen Anzahl aller nebeneinander senkrecht zur Haupterstreckungsrichtung (14a-f) des Sicherheitsnetzes angeordneter Reihen von Netzelementen (10a-f) entspricht.

7. Netz- und Seilkonstruktion (62a-f) nach einem der vorhergehenden Ansprüche, **dadurch gekennzeichnet, dass** zumindest ein in eine Richtung parallel zu einer Haupterstreckungsrichtung (14a-f) des Sicherheitsnetzes über den Innenbereich (22a-f) überstehender Teilbereich (34a-f, 36a-f, 42a-f, 44a-f) des Sicherheitsnetzes eine Anzahl von senkrecht zu der Haupterstreckungsrichtung (14a-f) des Sicherheitsnetzes nebeneinander in einer Reihe angeordneten Netzelementen (10a-f) aufweist, welche zumindest einem Zehntel einer maximalen Anzahl aller nebeneinander senkrecht zur Haupterstreckungsrichtung (14a-f) des Sicherheitsnetzes angeordneter Reihen von Netzelementen (10a-f) entspricht.

8. Netz- und Seilkonstruktion (62a-f) nach einem der vorhergehenden Ansprüche, **dadurch gekennzeichnet, dass** zumindest ein in eine Richtung parallel zu einer Haupterstreckungsrichtung (14a-f) des Sicherheitsnetzes über den Innenbereich (22a-f) überstehender Teilbereich (34a-f, 36a-f, 42a-f, 44a-f) des Sicherheitsnetzes eine zumindest im Wesentlichen dreiecksförmige Anordnung (46a-f) von Netzelementen (10a-f) aufweist.

9. Netz- und Seilkonstruktion (62a-f) nach einem der vorhergehenden Ansprüche, **dadurch gekennzeichnet, dass** zumindest ein Netzelement (10f) zumindest eines in eine Richtung parallel zu einer Haupterstreckungsrichtung (14f) des Sicherheitsnetzes über den Innenbereich (22f) überstehenden Teilbereichs (34f, 36f, 42f, 44f) des Sicherheitsnetzes einen Umfang (72f) aufweist, welcher wesentlich von einem mittleren Umfang von Netzelementen (10f) außerhalb des Teilbereichs (34f, 36f, 42f, 44f) abweicht.

10. Netz- und Seilkonstruktion (62a-f) nach einem der vorhergehenden Ansprüche, **dadurch gekennzeichnet, dass** zumindest ein Netzelement (10a-f) zumindest eines in eine Richtung parallel zu einer Haupterstreckungsrichtung (14a-f) des Sicherheitsnetzes über den Innenbereich (22a-f) überstehenden Teilbereichs (34a-f, 36a-f, 42a-f, 44a-f) des Sicherheitsnetzes in einem Testversuch eine Reißfestigkeit aufweist, welche wesentlich von einer mittleren Reißfestigkeit von Netzelementen (10a-f) außerhalb des Teilbereichs (34a-f, 36a-f, 42a-f, 44a-f) abweicht.

11. Netz- und Seilkonstruktion (62a-f) nach einem der vorhergehenden Ansprüche, **dadurch gekennzeichnet, dass** zumindest ein Netzelement (10a-f) eine Sollbruchstelle (40a-f) aufweist.

12. Netz- und Seilkonstruktion (62a-f) nach einem der vorhergehenden Ansprüche, **dadurch gekennzeichnet, dass** zumindest ein Netzelement (10e) zumindest eines in eine Richtung parallel zu einer Haupterstreckungsrichtung (14e) des Sicherheitsnetzes über den Innenbereich (22e) überstehenden Teilbereichs (34e, 36e, 42e, 44e) des Sicherheitsnetzes zumindest eine Materialzusammensetzung (114e) aufweist, welche wesentlich verschieden ist von einer Materialzusammensetzung (114'e) der Netzelemente (10e) außerhalb des Teilbereichs (34e, 36e, 42e, 44e).

13. Netz- und Seilkonstruktion (62a-f) nach einem der vorhergehenden Ansprüche, **dadurch gekennzeichnet, dass** zumindest ein Netzelement (10d) zumindest eines in eine Richtung parallel zu einer Haupterstreckungsrichtung (14d) des Sicherheitsnetzes über den Innenbereich (22d) überstehenden Teilbereichs (34d, 36d, 42d, 44d) des Sicherheitsnetzes zumindest eine Drahtwindung (48d) aufweist, deren Drahtdurchmesser (24d) wesentlich größer ist als ein mittlerer Drahtdurchmesser von Drahtwindungen (48d) von Netzelementen (10d) außerhalb des Teilbereichs (34d, 36d, 42d, 44d).

14. Netz- und Seilkonstruktion (62a-f) nach einem der vorhergehenden Ansprüche, **dadurch gekennzeichnet, dass** zumindest ein Netzelement (10c) zumindest eines in eine Richtung parallel zu einer Haupterstreckungsrichtung (14c) des Sicherheitsnetzes über den Innenbereich (22c) überstehenden Teilbereichs (34c, 36c, 42c, 44c) des Sicherheitsnetzes zumindest eine Anzahl an Drahtwindungen (48c) aufweist, welche wesentlich von einer mittleren Anzahl von Drahtwindungen von Netzelementen (10c) außerhalb des Teilbereichs (34c, 36c, 42c, 44c) abweicht.

15. Netz- und Seilkonstruktion (62a-f) nach einem der vorhergehenden Ansprüche, **dadurch gekennzeichnet, dass** zumindest ein Netzelement (10b) zumindest eines in eine Richtung parallel zu einer Haupterstreckungsrichtung (14b) des Sicherheitsnetzes über den Innenbereich (22b) überstehenden Teilbereichs (34b, 36b, 42b, 44b) des Sicherheitsnetzes zumindest einen Energieabsorber (54b) aufweist.

16. Netz- und Seilkonstruktion (62a-f) nach Anspruch 15, **dadurch gekennzeichnet, dass** der Energieabsorber (54b) einstückig mit dem zumindest einen Netzelement (10b) ausgebildet ist.

17. Netz- und Seilkonstruktion (62a-f) nach einem der vorhergehenden Ansprüche, **dadurch gekennzeichnet, dass** zumindest ein Netzelement (10a-f) genau drei Anschlussbereiche (56a-f, 58a-f, 60a-f) zu benachbarten Netzelementen (10a-f) ausbildet.

18. Netz- und Seilkonstruktion (62a-f) nach einem der vorhergehenden Ansprüche, **gekennzeichnet durch** zumindest ein, einen Bewegungsfreiheitsgrad der Netzelemente (10a-f) festlegendes Führungsseil (64a-f, 84a-f), welches durch zumindest jedes dritte Netzelement (10a-f) einer parallel zu einer Haupterstreckungsrichtung (14a-f) des Sicherheitsnetzes verlaufenden Reihe von Netzelementen (10a-f) an zumindest einer Außenkante (66a-f, 110a-f) des Sicherheitsnetzes hindurchgeführt ist und wobei das Führungsseil (64a-f, 84a-f) als zumindest ein Tragseil (68a-f) ausgebildet ist.

19. Netz- und Seilkonstruktion (62a-f) nach einem der vorhergehenden Ansprüche, **gekennzeichnet durch** eine Eignung zu einem Auffangen schwerer Lasten, vorzugsweise dynamischer Einschlagskörper.

20. Verwendung eines zumindest zu einem Großteil aus ineinandergreifenden Netzelementen (10a-f) gebildeten Sicherheitsnetzes als ein Auffangnetz (74a-f) in der Netz- und Seilkonstruktion (62a-f) nach einem der Ansprüche 1 bis 19, wobei die Netzelemente (10a-f) in sich geschlossene filamentartige Gebilde sind, wobei eine maximale Gesamterstreckung (12a-f) des Sicherheitsnetzes parallel zu einer Haupterstreckungsrichtung (14a-f) des Sicherheitsnetzes in einem zumindest eine äußerste Reihe (16a-f) von Netzelementen (10a-f) umfassenden Außenbereich (18a-f) des Sicherheitsnetzes wesentlich größer ist als eine minimale Gesamterstreckung (20a-f) des Sicherheitsnetzes parallel zu der Haupterstreckungsrichtung (14a-f) in einem von dem Außenbereich (18a-f) verschiedenen Innenbereich (22a-f) des Sicherheitsnetzes, wobei die Gesamterstreckungen (12a-f; 20a-f) bei einem vollständig flach ausgebreiteten und von inneren Spannungen freien Sicherheitsnetz gemessen sind, und wobei der Außenbereich (18a-f) an zumindest einer Außenkante (66a-f, 110a-f) eine Mehrzahl an, in der Haupterstreckungsrichtung (14a-f) über die minimale Gesamterstreckung (20a-f) des Sicherheitsnetzes hinaus stehende Netzelemente (10a-f) aufweist.

## Claims

1. A net and rope construction (62a-f) with a safety net in an assembled state, wherein the safety net is formed at least to a large extent by mutually engaging net elements (10a-f), wherein the net elements (10a-f) are filamentlike structures which are closed per se, wherein a maximum overall extension (12a-f) of the safety net parallel to a main extension direction (14a-f) of the safety net is substantially greater in an exterior region (18a-f) of the safety net, which includes at least one outermost row (16a-f) of net elements (10a-f), than a minimum overall extension (20a-f) of the safety net parallel to the main extension direction (14a-f) in an interior region (22a-f) of the safety net which differs from the exterior region (18a-f), wherein the overall extensions (12a-f, 20a-f) are measured with a safety net spread-out in a completely flat manner and devoid of inner stresses, **characterized in that** the exterior region (18a-f) comprises, on at least one outer edge (66a-f, 110a-f), a plurality of yielding net elements (10a-f) which, in the main extension direction (14a-f), protrude over the minimum overall extension (20a-f) of the safety net, and which are pushed together in the assembled, non-loaded state, at which the safety net is suspended within the net and rope construction (62a-f) and which are configured, when under load, to create an additional buffer path.

2. The net and rope construction (62a-f) according to claim 1, **characterized in that** the maximum overall extension (12a-f) of the safety net parallel to the main extension direction (14a-f) of the safety net is greater in the exterior region (18a-f) at least by a mean diameter of the net elements (10a-f) of the safety net than the minimum overall extension (20a-f) of the safety net parallel to the main extension direction (14a-f) in the interior region (22a-f) which differs from the exterior region (18a-f).

3. The net and rope construction (62a-f) according to claim 1 or 2, **characterized in that** a maximum overall extension (70a-f) of the safety net parallel to the main extension direction (14a-f) of the safety net is greater in a further exterior region (26a-f) of the safety net which differs from the exterior region (18a-f) than the minimum overall extension (20a-f) of the safety net parallel to the main extension direction (14a-f) in the interior region (22a-f) of the safety net which differs from the exterior region (18a-f) and from the further exterior region (26a-f).

4. The net and rope construction (62a-f) according to any one of the preceding claims, **characterized in that** the net elements (10a-f) are arranged in a mirror-symmetrical manner with respect to a mirror plane (30a-f, 32a-f), which is at least substantially perpendicular to a main extension plane (28a-f) of the safety net.

5. The net and rope construction (62a-f) according to any one of the preceding claims, **characterized in that** at least one partial region (34a-f, 36a-f, 42a-f, 44a-f) of the safety net which protrudes over the interior region (22a-f) in a direction parallel to the main extension direction (14a-f) of the safety net comprises at least four net elements (10a-f).

6. The net and rope construction (62a-f) according to any one of the preceding claims, **characterized in that** at least one partial region (34a-f, 36a-f, 42a-f, 44a-f) of the safety net, which protrudes over the interior region (22a-f) in a direction parallel to a main extension direction (14a-f) of the safety net, comprises a number of net elements (10a-f) arranged side by side in a row in the main extension direction (14a-f) of the safety net, which corresponds to at least a twentieth of a maximum number of all rows of net elements (10a-f) arranged side by side perpendicularly to the main extension direction (14a-f) of the safety net.

7. The net and rope construction (62a-f) according to any one of the preceding claims, **characterized in that** at least one partial region (34a-f, 36a-f, 42a-f, 44a-f) of the safety net, which protrudes over the interior region (22a-f) in a direction parallel to a main extension direction (14a-f) of the safety net, comprises a number of net elements (10a-f) arranged side by side in a row perpendicularly to the main extension direction (14a-f) of the safety net, which corresponds to at least a tenth of a maximum number of all rows of net elements (10a-f) arranged side by side perpendicularly to the main extension direction (14a-f) of the safety net.

8. The net and rope construction (62a-f) according to any one of the preceding claims, **characterized in that** at least one partial region (34a-f, 36a-f, 42a-f, 44a-f) of the safety net, which protrudes over the interior region (22a-f) in a direction parallel to the main extension direction (14a-f) of the safety net, comprises an at least substantially triangle-shaped arrangement (46a-f) of net elements (10a-f).

9. The net and rope construction (62a-f) according to any one of the preceding claims, **characterized in that** at least one net element (10f) of at least one partial region (34f, 36f, 42f, 44f) of the safety net, which protrudes over the interior region (22f) in a direction parallel to a main extension direction (14f) of the safety net, comprises a periphery (72f) which deviates substantially from a mean periphery of net elements (10f) outside the partial region (34f, 36f, 42f, 44f).

10. The net and rope construction (62a-f) according to any one of the preceding claims, **characterized in that** at least one net element (10a-f) of at least one partial region (34a-f, 36a-f, 42a-f, 44a-f) of the safety net, which protrudes over the interior region (22a-f) in a direction parallel to a main extension direction (14a-f) of the safety net, has in a test trial a tear resistance which deviates substantially from a mean tear resistance of net elements (10a-f) outside the partial region (34a-f, 36a-f, 42a-f, 44a-f).

11. The net and rope construction (62a-f) according to any one of the preceding claims, **characterized in that** at least one net element (10a-f) comprises a predetermined breaking point (40a-f).

12. The net and rope construction (62a-f) according to any one of the preceding claims, **characterized in that** at least one net element (10e) of at least one partial region (34e, 36e, 42e, 44e) of the safety net, which protrudes over the interior region (22e) in a direction parallel to a main extension direction (14e) of the safety net, at least has a material composition (114e) which differs substantially from a material composition (114'e) of the net elements (10e) outside the partial region (34e, 36e, 42e, 44e).

13. The net and rope construction (62a-f) according to any one of the preceding claims, **characterized in that** at least one net element (10d) of at least one partial region (34d, 36d, 42d, 44d) of the safety net, which protrudes over the interior region (22d) in a direction parallel to a main extension direction (14d) of the safety net, comprises at least one wire winding (48d), the wire diameter (24d) of which is substantially greater than a mean wire diameter of wire windings (48d) of net elements (10d) outside the partial region (34d, 36d, 42d, 44d).

14. The net and rope construction (62a-f) according to any one of the preceding claims, **characterized in that** at least one net element (10c) of at least one partial region (34c, 36c, 42c, 44c) of the safety net, which protrudes over the interior region (22c) in a direction parallel to a main extension direction (14c) of the safety net, comprises at least a number of wire windings (48c) which deviates substantially from a mean number of wire windings of net elements (10c) outside the partial region (34c, 36c, 42c, 44c).

15. The net and rope construction (62a-f) according to any one of the preceding claims, **characterized in that** at least one net element (10b) of at least one partial region (34b, 36b, 42b, 44b) of the safety net, which protrudes over the interior region (22b) in a direction parallel to a main extension direction (14b) of the safety net, comprises at least one energy absorber (54b).

16. The net and rope construction (62a-f) according to claim 15, **characterized in that** the energy absorber (54b) is realized integrally with the at least one net element (10b).

17. The net and rope construction (62a-f) according to any one of the preceding claims, **characterized in that** at least one net element (10a-f) realizes precisely three connection regions (56a-f, 58a-f, 60a-f) to neighboring net elements (10a-f).

18. The net and rope construction (62a-f) according to any one of the preceding claims, **characterized by** at least one guide rope (64a-f, 84a-f) which determines a degree of freedom of movement of the net elements (10a-f) and which is guided through at least every third net element (10a-f) of a row of net elements (10a-f), which extends parallel to a main extension direction (14a-f) of the safety net, on at least one outer edge (66a-f, 110a-f) of the safety net and wherein the guide rope (64a-f, 84a-f) is realized as at least one support rope (68a-f).

19. The net and rope construction (62a-f) according to any one of the preceding claims, **characterized by** a suitability for catching heavy loads, preferably dynamic impact bodies.

20. A use of a safety net, which is formed at least to a large extent by mutually engaging net elements (10a-f), as a catch net (74a-f) in the net and rope construction (62a-f) according to any one of claims 1 to 19, wherein the net elements (10a-f) are filament-like structures which are closed per se, wherein a maximum overall extension (12a-f) of the safety net parallel to a main extension direction (14a-f) of the safety net is substantially greater in an exterior region (18a-f) of the safety net, which includes at least one outermost row (16a-f) of net elements (10a-f), than a minimum overall extension (20a-f) of the safety net parallel to the main extension direction (14a-f) in an interior region (22a-f) of the safety net which differs from the exterior region (18a-f), wherein the overall extensions (12a-f; 20a-f) are measured with a safety net spread-out in a completely flat manner and devoid of inner stresses, and wherein the exterior region (18a-f) comprises, on at least one outer edge (66a-f, 110a-f), a plurality of net elements (10a-f) which, in the main extension direction (14a-f) protrude over the minimum overall extension (20a-f) of the safety net.

## Revendications

1. Structure de filet et de câble (62a-f) avec un filet de sécurité à un état monté, où le filet de sécurité est formé au moins en grande partie d'éléments de filet (10a-f) s'engageant les uns dans les autres, où les éléments de filet (10a-f) sont des structures en forme de filaments fermées sur elles-mêmes, où une extension totale maximale (12a-f) du filet de sécurité parallèlement à une direction d'extension principale (14a-f) du filet de sécurité dans une zone extérieure (18a-f) du filet de sécurité comprenant au moins une rangée la plus extérieure (16a-f) d'éléments de filet (10a-f) est sensiblement plus grande qu'une extension totale minimale (20a-f) du filet de sécurité parallèlement à la direction d'extension principale (14a-f) dans une zone intérieure (22a-f) du filet de sécurité différente de la zone extérieure (18a-f), où les extensions totales (12a-f ; 20a-f) sont mesurées dans le cas d'un filet de sécurité entièrement étendu à plat et exempt de tensions internes, **caractérisée en ce que** la zone extérieure (18a-f) présente sur au moins une arête extérieure (66a-f, 110a-f) une pluralité d'éléments de filet (10a-f) s'étendant dans la direction d'extension principale (14a-f) au-delà de l'extension totale minimale (20a-f) du filet de sécurité, donnant un chemin et étant rassemblés à l'état monté non chargé, sur lesquels le filet de sécurité est suspendu dans la structure de filet et de câble (62a-f) et qui sont prévus dans un cas de charge pour créer un chemin tampon supplémentaire.

2. Structure de filet et de câble (62a-f) selon la revendication 1, **caractérisée en ce que** l'extension totale maximale (12a-f) du filet de sécurité parallèlement à la direction d'extension principale (14a-f) du filet de sécurité dans la zone extérieure (18a-f) est plus grande au moins d'un diamètre moyen des éléments de filet (10a-f) du filet de sécurité que l'extension totale minimale (20a-f) du filet de sécurité parallèlement à la direction d'extension principale (14a-f) dans la zone intérieure (22a-f) différente de la zone extérieure (18a-f).

3. Structure de filet et de câble (62a-f) selon la revendication 1 ou 2, **caractérisée en ce qu'**une extension totale maximale (70a-f) du filet de sécurité parallèlement à la direction d'extension principale (14a-f) du filet de sécurité dans une autre zone extérieure (26a-f) du filet de sécurité différente de la zone extérieure (18a-f) est plus grande que l'extension totale minimale (20a-f) du filet de sécurité parallèlement à la direction d'extension principale (14a-f) dans la zone intérieure (22a-f) du filet de sécurité différente de la zone extérieure (18a-f) et de l'autre zone extérieure (26a-f).

4. Structure de filet et de câble (62a-f) selon l'une quelconque des revendications précédentes, **caractérisée en ce que** les éléments de filet (10a-f) sont disposés en symétrie miroir par rapport à un plan miroir (30a-f, 32a-f) au moins sensiblement perpendiculaire à un plan d'extension principale (28a-f) du filet de sécurité.

5. Structure de filet et de câble (62a-f) selon l'une quelconque des revendications précédentes, **caractérisée en ce qu'**au moins une zone partielle (34a-f, 36a-f, 42a-f, 44a-f) du filet de sécurité faisant saillie de la zone intérieure (22a-f) dans une direction parallèle à la direction d'extension principale (14a-f) du filet de sécurité présente au moins quatre éléments de filet (10a-f).

6. Structure de filet et de câble (62a-f) selon l'une quelconque des revendications précédentes, **caractérisée en ce qu'**au moins une zone partielle (34a-f, 36a-f, 42a-f, 44a-f) du filet de sécurité faisant saillie de la zone intérieure (22a-f) dans une direction parallèle à une direction d'extension principale (14a-f) du filet de sécurité présente un nombre d'éléments de filet (10a-f) disposés les uns à côté des autres en une rangée dans la direction d'extension principale (14a-f) du filet de sécurité, qui correspond au moins à un vingtième d'un nombre maximal de toutes les rangées d'éléments de filet (10a-f) disposées les unes à côté des autres perpendiculairement à la direction d'extension principale (14a-f) du filet de sécurité.

7. Structure de filet et de câble (62a-f) selon l'une quelconque des revendications précédentes, **caractérisée en ce qu'**au moins une zone partielle (34a-f, 36a-f, 42a-f, 44a-f) du filet de sécurité faisant saillie de la zone intérieure (22a-f) dans une direction parallèle à une direction d'extension principale (14a-f) du filet de sécurité présente un nombre d'éléments de filet (10a-f) disposés les uns à côté des autres en une rangée perpendiculairement à la direction d'extension principale (14a-f) du filet de sécurité, qui correspond au moins à un dixième d'un nombre maximal de toutes les rangées d'éléments de filet (10a-f) disposées les unes à côté des autres perpendiculairement à la direction d'extension principale (14a-f) du filet de sécurité.

8. Structure de filet et de câble (62a-f) selon l'une quelconque des revendications précédentes, **caractérisée en ce qu'**au moins une zone partielle (34a-f, 36a-f, 42a-f, 44a-f) du filet de sécurité faisant saillie de la zone intérieure (22a-f) dans une direction parallèle à une direction d'extension principale (14a-f) du filet de sécurité présente un agencement (46a-f) au moins sensiblement triangulaire d'éléments de filet (10a-f).

9. Structure de filet et de câble (62a-f) selon l'une quelconque des revendications précédentes, **caractérisée en ce qu'**au moins un élément de filet (10f) d'au moins une zone partielle (34f, 36f, 42f, 44f) du filet de sécurité faisant saillie de la zone intérieure (22f) dans une direction parallèle à une direction d'extension principale (14f) du filet de sécurité présente une périphérie (72f) qui s'écarte sensiblement d'une périphérie moyenne d'éléments de filet (10f) à l'extérieur de la zone partielle (34f, 36f, 42f, 44f).

10. Structure de filet et de câble (62a-f) selon l'une quelconque des revendications précédentes, **caractérisée en ce qu'**au moins un élément de filet (10a-f) d'au moins une zone partielle (34a-f, 36a-f, 42a-f, 44a-f) du filet de sécurité faisant saillie de la zone intérieure (22a-f) dans une direction parallèle à une direction d'extension principale (14a-f) du filet de sécurité présente dans un essai de test une résistance à la déchirure qui s'écarte sensiblement d'une résistance à la déchirure moyenne d'éléments de filet (10a-f) à l'extérieur de la zone partielle (34a-f, 36a-f, 42a-f, 44a-f).

11. Structure de filet et de câble (62a-f) selon l'une quelconque des revendications précédentes, **caractérisée en ce qu'**au moins un élément de filet (10a-f) présente un point destiné à la rupture (40a-f).

12. Structure de filet et de câble (62a-f) selon l'une quelconque des revendications précédentes, **caractérisée en ce qu'**au moins un élément de filet (10e) d'au moins une zone partielle (34e, 36e, 42e, 44e) du filet de sécurité faisant saillie de la zone intérieure (22e) dans une direction parallèle à une direction d'extension principale (14e) du filet de sécurité présente au moins une composition de matériau (114e) qui est sensiblement différente d'une composition de matériau (114'e) des éléments de filet (10e) à l'extérieur de la zone partielle (34e, 36e, 42e, 44e).

13. Structure de filet et de câble (62a-f) selon l'une quelconque des revendications précédentes, **caractérisée en ce qu'**au moins un élément de filet (10d) d'au moins une zone partielle (34d, 36d, 42d, 44d) du filet de sécurité faisant saillie de la zone intérieure (22d) dans une direction parallèle à une direction d'extension principale (14d) du filet de sécurité présente au moins une spire de fil (48d) dont le diamètre de fil (24d) est sensiblement plus grand qu'un diamètre de fil moyen de spires de fil (48d) d'éléments de filet (10d) à l'extérieur de la zone partielle (34d, 36d, 42d, 44d).

14. Structure de filet et de câble (62a-f) selon l'une quelconque des revendications précédentes, **caractérisée en ce qu'**au moins un élément de filet (10c) d'au moins une zone partielle (34c, 36c, 42c, 44c) du filet de sécurité faisant saillie de la zone intérieure (22c) dans une direction parallèle à une direction d'extension principale (14c) du filet de sécurité présente au moins un nombre de spires de fil (48c) qui s'écarte sensiblement d'un nombre moyen de spires de fil d'éléments de filet (10c) à l'extérieur de la zone partielle (34c, 36c, 42c, 44c).

15. Structure de filet et de câble (62a-f) selon l'une quelconque des revendications précédentes, **caractérisée en ce qu'**au moins un élément de filet (10b) d'au moins une zone partielle (34b, 36b, 42b, 44b) du filet de sécurité faisant saillie de la zone intérieure (22b) dans une direction parallèle à une direction d'extension principale (14b) du filet de sécurité présente au moins un absorbeur d'énergie (54b).

16. Structure de filet et de câble (62a-f) selon la revendication 15, **caractérisée en ce que** l'absorbeur d'énergie (54b) est réalisé d'une seule pièce avec l'au moins un élément de filet (10b).

17. Structure de filet et de câble (62a-f) selon l'une quelconque des revendications précédentes, **caractérisée en ce qu'**au moins un élément de filet (10a-f) forme exactement trois zones de raccordement (56a-f, 58a-f, 60a-f) à des éléments de filet (10a-f) voisins.

18. Structure de filet et de câble (62a-f) selon l'une quelconque des revendications précédentes, **caractérisée par** au moins un câble de guidage (64a-f, 84a-f) fixant un degré de liberté de mouvement des éléments de filet (10a-f), qui est guidé à travers au moins chaque troisième élément de filet (10a-f) d'une rangée d'éléments de filet (10a-f) s'étendant parallèlement à une direction d'extension principale (14a-f) du filet de sécurité au niveau d'au moins un bord extérieur (66a-f, 110a-f) du filet de sécurité et le câble de guidage (64a-f, 84a-f) étant réalisé sous forme d'au moins un câble porteur (68a-f).

19. Structure de filet et de câble (62a-f) selon l'une des revendications précédentes, **caractérisée par** une aptitude à absorber des charges lourdes, de préférence des corps d'impact dynamiques.

20. Utilisation d'un filet de sécurité formé au moins en grande partie d'éléments de filet (10a-f) s'engageant les uns dans les autres en tant que filet d'absorption (74a-f) dans la structure de filet et de câble (62a-f) selon l'une quelconque des revendications 1 à 19, où les éléments de filet (10a-f) sont des structures en forme de filaments fermées sur elles-mêmes, où une extension totale maximale (12a-f) du filet de sécurité parallèlement à une direction d'extension principale (14a-f) du filet de sécurité dans une zone extérieure (18a-f) du filet de sécurité comprenant au moins une rangée la plus extérieure (16a-f) d'éléments de filet (10a-f) est sensiblement plus grande qu'une extension totale minimale (20a-f) du filet de sécurité parallèlement à la direction d'extension principale (14a-f) dans une zone intérieure (22a-f) du filet de sécurité différente de la zone extérieure (18a-f), où les extensions totales (12a-f ; 20a-f) sont mesurées dans le cas d'un filet de sécurité entièrement étendu à plat et exempt de tensions internes, et où la zone extérieure (18a-f) présente sur au moins une arête extérieure (66a-f, 110a-f) une pluralité d'éléments de filet (10a-f) s'étendant dans la direction d'extension principale (14a-f) au-delà de l'extension totale minimale (20a-f) du filet de sécurité.
